# EUROPEAN PATENT SPECIFICATION

(11) **EP 1 518 053 B1**
(45) Date of publication and mention of the grant of the patent: **08.10.2008**
(21) Application number: 03732666.7
(22) Date of filing: 27.05.2003
(51) Int. Cl.: F03D 1/00

(54) **METHOD AND CRANE FOR INSTALLING, MAINTAINING, AND DECOMMISSIONING WIND TURBINES**
KRAN UND VERFAHREN ZUR INSTALLATION, WARTUNG UND DEMONTAGE VON WINDTURBINEN
PROCEDE ET GRUE POUR L'INSTALLATION, LA MAINTENANCE ET LE DEMANTELEMENT D'EOLIENNES

(30) Priority: 28.05.2002 GB 0212258; 29.08.2002 GB 0219994; 29.11.2002 GB 0227870
(43) Date of publication of application: 30.03.2005
(73) Proprietor: ITI Scotland Limited, 191 West George Street Glasgow G2 2LB (GB)
(72) Inventor: INGRAM, James, Aberdeen AB10 6LH (GB); WILLIS, Stewart, Kenyon, Aberdeenshire AB34 5GJ (GB); MCINTYRE, Stuart, Aberdeen AB11 6TT (GB)
(74) Representative: Bingham, Ian Mark
(86) International application number: PCT/GB2003/002287
(87) International publication number: WO 2003/100248

(56) References cited:
- WO-A-96/10130
- WO-A-99/43956
- DE-A- 19 647 515
- DE-A- 19 741 988
- GB-A- 2 090 894
- GB-A- 2 169 570
- US-A- 4 828 125
- US-A- 5 028 194
- US-A- 5 497 857
- PATENT ABSTRACTS OF JAPAN vol. 1999, no. 08, 30 June 1999 (1999-06-30) & JP 11 082285 A (NKK CORP), 26 March 1999 (1999-03-26)

## Description

The present invention relates to a self-installing tower, nacelle and blades which may be used in the onshore and offshore wind farm industry.

The use of fossil fuels such as coal, oil and natural gas, has become increasingly undesirable as evidence has emerged that the burning of these fuels is a key factor in environmental problems, such as global warming, air quality deterioration, oil spills and acid rain. These problems, together with the depletion of fossil fuel resources, have encouraged the search for alternative energy resources.

Wind energy is recognised world wide as a proven technology which can be utilised to meet the world's increasing electricity demands in a sustainable economical and, most importantly, environmentally friendly manner. In particular, wind power can be used to generate electricity without air emissions, water pollution or waste products, and can greatly reduce the pollution which is currently generated by fossil fuels.

As a result of its advantageous properties, wind energy is currently the fastest growing source of electricity in the world. However, the erection of onshore wind farms is often controversial due to the visual impact of large and cumbersome wind turbines, which are visible for miles around. Often, the erection of wind farms is opposed by residents of nearby populated areas who regard them as unsightly or feel that their presence will reduce property values in the area. In addition, a variety of restrictions have affected the construction of these wind farms, including planning constraints and restrictions on the visual impact and sound emissions from the turbines.

Because of these underlying problems, the idea of taking the wind industry offshore has developed. Offshore wind farms have minimal environmental effects and do not encounter the same planning restrictions or difficulties with nearby residents that have arisen with the development of onshore wind farms. As a consequence, the size and sound emissions of the farms do not have to be strictly regulated and much larger multi-megawatt machines can be used. In addition, the size of the offshore resource is huge, even when restrictions such as shipping lanes, areas of limited sea depth and known dumping grounds are taken into account.

Whilst the erection of wind farms offshore has some advantages over on-land farms, construction of the turbines used to generate electricity is more expensive than onshore farms. In fact it is estimated that capital costs are in the region of 30% to 50% higher offshore due to the larger machine size, maintenance and operational costs, including the cost of transporting and installing the wind turbines (including the towers) at sea. It will be appreciated that the construction of the wind-towers, delivery to site and assembly of these large machines require specialised equipment and this greatly increases the cost in installation, maintenance and decommissioning an offshore farm.

A problem with wind turbines is that they are big, and produce a relatively small amount of power (revenue). Therefore, they need to be installed as efficiently and cheaply as possible, whilst at the same time minimising the risks to personnel. The construction industry as a whole is one of the most dangerous commercial activities undertaken in Europe, with the wind industry being no different. Given the low energy density of wind generation, poor safety statistics would mean that the industry as a whole would run the risk of being seen as a dangerous means of generation when measured on a "per unit of power generated" basis. Apparatus is therefore required to make construction of wind farms safer and deliver improved cost, safety and environmental outcomes. They should ultimately operate very reliably for many years.

At present, a commonly used method for constructing offshore wind turbines uses a floating crane vessel. Typically a specially adapted ship is piloted to the area where the turbine is to be constructed. Generally as a result of the size of the crane and tower structure they must carry, these vessels are large in size, and thus relatively expensive to use. Once the vessel has reached the area where the turbine is to be positioned, a concrete structure often known as a "gravity foundation" is placed onto the seabed. A pylon-like turbine tower is then fitted onto the concrete foundation using the cranes, the turbine tower carrying the blades which spin upwind of the tower itself. However, this process incurs significant costs as it is necessary for the crane carrying vessel to be of a sufficiently large size to carry the pylon-like turbine tower and the vessel must remain in the area in order to support the operation.

DE19741988 relates to a device for constructing wind turbine towers. The device moves upon the tower structure by means of rollers (70) and caterpillar tracks (7) mounted on a frame (24), but does disclose or suggest a self-advancing crane having independent upper and lower grip assemblies separated by extendible/ retractable legs which are operable in coordination with actuation of the grip assemblies.

It is therefore an object of the present invention to provide a self-installing or self-erecting wind tower, nacelle and blades, which can be erected in a manner, which is easier and cheaper than conventional wind towers, nacelles and blades. Particularly it is an object of the present invention to provide a self-installing or self-erecting wind tower which is reversible, i.e. can be dismantled, either in entirety or in part, as easily as it can be erected, is complete and "self sufficient" - i.e., can be built from an already constructed structure.

It is a particular object of the present invention to provide a wind tower, which can be self-erected both offshore and onshore without the need for specialist vessels or cranes.

According to the present invention there is provided apparatus for use in the onshore and offshore wind farm industry, said apparatus comprising a jacking crane and a plurality of tower sections which can be combined to erect a tower on which a nacelle and one or more blades can be mounted using the same jacking crane.

Advantageously the jacking crane can be extended and climb upwards on the tower as the tower is erected from the tower sections and is used to position each of the tower sections during erection.

The tower is erected from the tower sections on a foundation platform. The jacking crane, tower sections and nacelle may be attached to or loaded onto the foundation platform before it is towed to the offshore location. Alternatively, the jacking crane, tower sections and nacelle may be loaded onto the foundation platform after it has been towed to the offshore location.

Preferably the nacelle is positioned on top of the jacking crane. Where the jacking crane, tower structure and nacelle are loaded onto the foundation platform after it has been towed to the offshore location, the jacking crane may be transferred from a vessel such as a ship or boat onto the foundation platform with the nacelle positioned on top of the jacking crane.

Most preferably the jacking crane acts as a motion compensation system during transferral from the vessel to the foundation platform.

The jacking crane may be hydraulically operated.

The jacking crane comprised a number of legs which can extend and retract. Preferably the jacking crane has four legs.

The tower sections may be approximately 10 - 25 metres in length.

Preferably the tower sections are air and water-tight, or can contain buoyancy units. Most preferably the tower sections are buoyant. Advantageously, this aids towing of the foundation platform to the offshore location.

Preferably the jacking crane has a winch or which can be used to lift each of the tower sections into position, on top of the previous tower section. The winch may be located within the nacelle.

The tower sections may be mounted on or attached to the foundation platform. Alternatively, the tower sections may be transferred from a vessel onto the foundation platform.

Optionally the nacelle may rotate on top of the jacking crane to facilitate lifting operations.

Optionally the nacelle may be equipped with a winch or crane intended to assist with the installation of the nacelle or blades and their subsequent maintenance or replacement of the equipment within the nacelle or blades and then may be used to assist installation.

Optionally a boom may be attached to the jacking crane.

Optionally offshore the apparatus may also comprise a seawater ballast to counterbalance the boom.

Preferably the jacking crane is securely anchored to the tower during and after erection and may have a mechanism to prevent detachment from the tower. The tower sections may be provided with purpose built attachment points, which are adapted to receive the jacking crane.

Optionally the purpose built attachment points are pockets. The jacking crane may have a first and second grip assembly which are adapted to fit into the pockets.

Optionally the jacking crane may have one or more clamps, which engage the tower sections. Advantageously this provides a secure and safe anchorage of the jacking crane to the tower.

Preferably the one or more clamps grip the tower sections by compression and friction.

The one or more clamps may include contact pads, which are made from a compliant material such as polyurethane. The contact pads can be brought into contact with one of the tower sections and will develop vertical frictional resistance upon the application of pressure.

Preferably the one or more clamps are mounted on an arrangement of struts, ties and beams which can be adjusted to accommodate a change in the cross section of the tower or tower sections. In this manner the jacking crane can be adapted for use on a variety-of wind turbine tower designs, or on a tapered wind turbine tower.

Preferably the contact pads are mounted on a flexible backing substrate that is tensioned at the ends. Preferably the flexible backing substrate contacts the tower in a plurality of locations or sections to provide even distribution of load.

Preferably the length of the flexible backing substrate can be altered to ensure the clamp maintains a secure fit to the tower. In a preferred embodiment this is achieved by the inclusion of rollers or sprockets. The ends of the flexible substrate are preferably made from, or covered with a complaint material and are adapted to be passed around the rollers or sprockets which rotate as the length of the substrate is altered.

Preferably the one or more clamps can be locked.

Preferably the tower sections have means for improving the attachment of the jacking crane. For example they may have a high grip surface achieved by the use of anti-slip paint or glue-on grip strips.

Mechanical toothed wedges may also be incorporated into the tower, tower sections, jacking crane or clamps which engage a wedging action between the tower and jacking crane.

Preferably the jacking crane is also used to transport the blades up the tower, for attachment to the nacelle. This process can also be carried out in reverse to transport the blades down the tower during decommissioning.

The jacking crane may also be used for maintenance purposes.

Preferably the jacking crane can be connected to a variety of interface tools. For example, the jacking unit may be adapted to carry tools, which are used for inspection and/or replacement and / or repair of the blades, nacelle or tower sections.

The jacking crane may comprise framework or a crane capable of plumbing or reaching into the nacelle.

The framework or additional crane can lift the nacelle or a sub component of the nacelle. Advantageously this allows the nacelle to be lifted after the tower is completed.

The framework or additional crane can also be used for maintenance of the tower and tower sections.

Optionally the framework or additional crane is extendible.

Where the jacking crane comprises a crane, said crane may be a knuckle boom crane.

The jacking crane may comprise a working platform and facilities for construction or maintenance personnel. These may be testing, monitoring, or service facilities, or welfare facilities for personal use.

According to a second aspect of the present invention, there is provided a method for installing the apparatus of the first aspect of the present invention in an offshore location, the method comprising the steps of:
(a) loading or attaching tower sections on to the foundation platform;
(b) towing the foundation platform to an offshore location using a transportation vessel;
(c) anchoring the foundation platform in the offshore position, removing buoyancy from tower sections or other buoyancy units(possibly by flooding);
(d) transporting the jacking crane and nacelle from the transportation vessel to the foundation platform;
(e) removing the transportation vessel, if required;
(f) extending the jacking crane vertically;
(g) winching a first tower section from the foundation platform into position with the jacking crane;
(h) extending the jacking crane;
(i) winching a second tower section from the foundation platform into position with the jacking crane and on top of the first tower section;
(j) repeating steps (f) to (i) with further tower sections to erect a tower; and
(k) mounting turbine blades on to the nacelle.

The tower sections may be used to provide buoyancy to foundation platform as it is towed to the offshore location.

Optionally the transportation vessel may be removed during anchoring of the foundation platform, and may return for step (d).

Preferably the jacking crane is used to raise the turbine blades up to the nacelle. The winch in the nacelle may be used to transport the blades from the boat to the platform.

The method may be automated.

The method may be controlled by remote control.

According to a third aspect of the present invention there is provided a method for installing the apparatus of the first aspect of the present invention on an offshore foundation platform, the method comprising the steps of:
(a) towing a foundation platform to an offshore location using a transportation vessel;
(b) transporting the jacking crane and nacelle from the transport vessel to the foundation platform;
(c) transporting a first tower section onto the foundation platform from the transportation vessel;
(d) positioning the first tower section within and attached to the jacking crane;
(e) transporting a second tower section onto the foundation platform from the transportation vessel;
(f) extending the jacking crane;
(g) winching the second tower section into position on top of the first tower section within the jacking crane;
(h) repeating step d) to f) with further tower sections to erect a tower;
(i) transporting a blade onto the foundation platform for mounting on the nacelle from the transportation vessel, possibly using winch inside nacelle;
(j) moving the jacking crane up the tower to a position where the blade can be mounted on the nacelle; and
(k) repeating steps g) to h) for subsequent blades.

The method may be automated.

The method may be controlled by remote control.

According to a fourth aspect of the present invention, there is provided a method for installing the apparatus of the first aspect of the present invention on an foundation platform, the method comprising the steps of:
(a) loading the nacelle, tower sections and jacking crane onto an foundation platform;
(b) towing the foundation platform to an offshore location using a transportation vessel;
(c) anchoring the foundation platform to the sea bed at the offshore location;
(d) removing the transportation vessel;
(e) extending the jacking crane;
(f) winching a first tower section from the foundation platform into position with the jacking crane;
(g) extending the jacking crane;
(h) winching a second tower section from the foundation platform into position with the jacking crane and on top of the first tower section;
(i) repeating steps (e) to (h) with further tower sections to erect a tower;
(j) mounting the nacelle on the top of the tower; and
(k) mounting turbine blades on to the nacelle.

The method may be automated.

The method may be controlled by remote control.

Preferably the jacking crane is used to raise the turbine blades up to the nacelle. The winch in the nacelle may be used to transport the blades from the boat to the platform.

According to a fifth aspect of the present invention, there is provided a method for installing the apparatus of the first aspect of the present invention on a foundation platform or other foundation, the method comprising the steps of:
(a) delivering the nacelle, tower sections and jacking crane over.a foundation platform or other foundation using a transport vehicle;
(b) lifting the nacelle onto the foundation platform or foundation;
(c) removing the transport vehicle;
(d) assembling crane and jacking crane;
(e) extending the jacking crane;
(f) delivering tower sections to the foundation platform or foundation using a transport vehicle;
(g) winching a first tower section from the transport vehicle using crane;
(h) sliding the first tower section into position within the jacking crane using the crane;
(i) supporting the nacelle on the tower section whilst adjusting jacking crane to provide clearance for one or more clamps;
(j) attaching clamps to securely and safely anchor jacking crane to tower;
(k) repeating steps (g) to (j) with further tower sections to erect a tower;
(l) mounting the nacelle on top of the tower; and
(m) mounting turbine blades on to the nacelle.

An embodiment of the present invention will now be described by way of an example only, with reference to the following Figures, in which:
Figure 1 is a schematic view of the vessel in position next to an foundation platform ready for the erection of the self-installing tower in an offshore environment according to the preferred embodiment of the present invention;
Figures 2 to 22 are schematic views showing installation of the self-installing tower;
Figure 23 is a schematic view of the self-installing tower when installed and when ready for attachment of the turbine blades;
Figures 24 to 30 are schematic views of the turbine blades being attached to the self-installing foundation platform;
Figure 31 shows a foundation platform with tower sections attached being towed to an offshore location;
Figure 32 shows the foundation platform of Figure 31 after the transportation vessel has left and being anchored in place;
Figures 33 and 34 show the nacelle and jacking crane being loaded onto the foundation platform; and
Figures 35 to 46 show the tower being erected.
Figures 47 to 58 illustrate a method of erecting a wind turbine system on an foundation platform or other foundation.
Figures 59 to 67 are schematic drawings of the framework and jacking crane in position with the tower and tower sections.

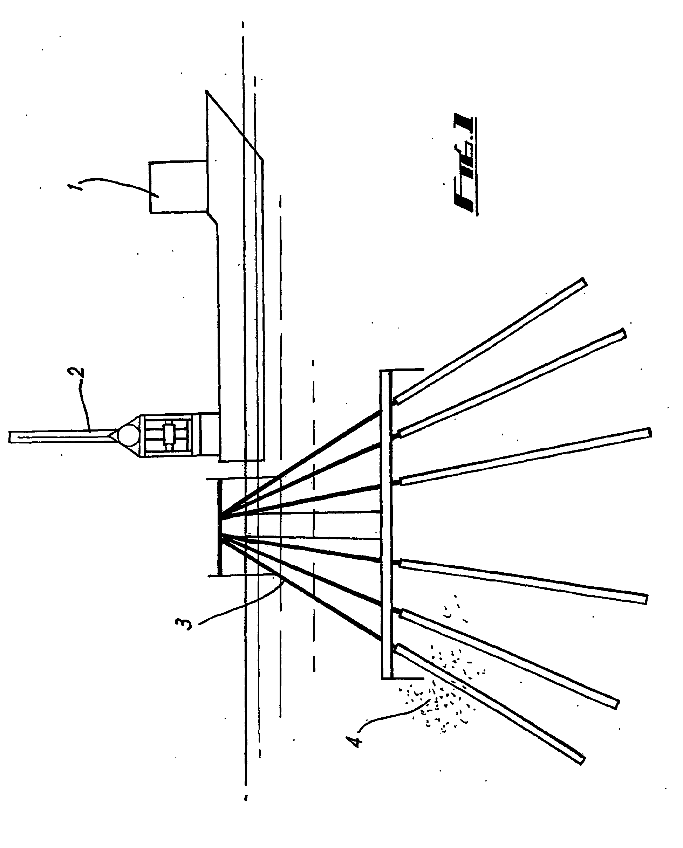

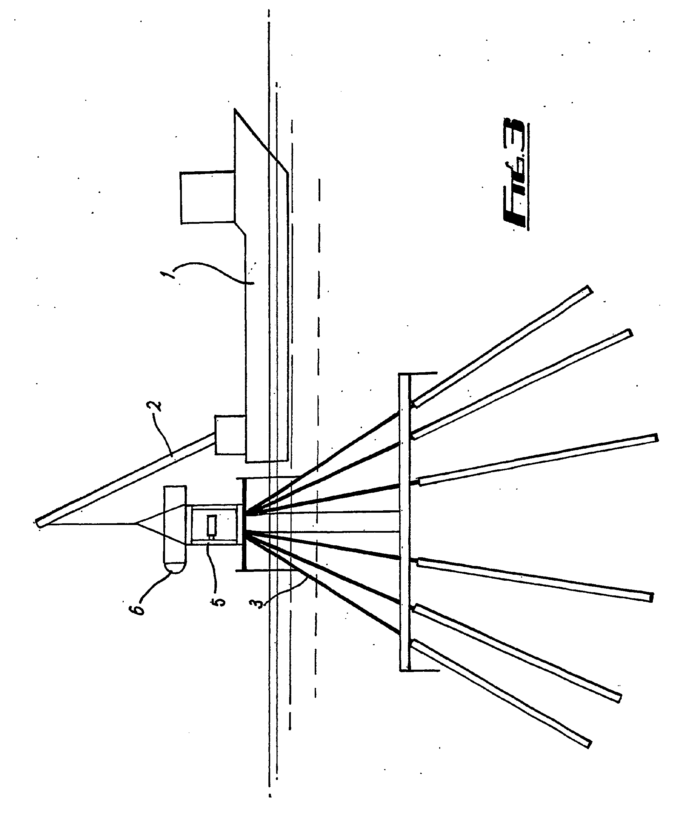

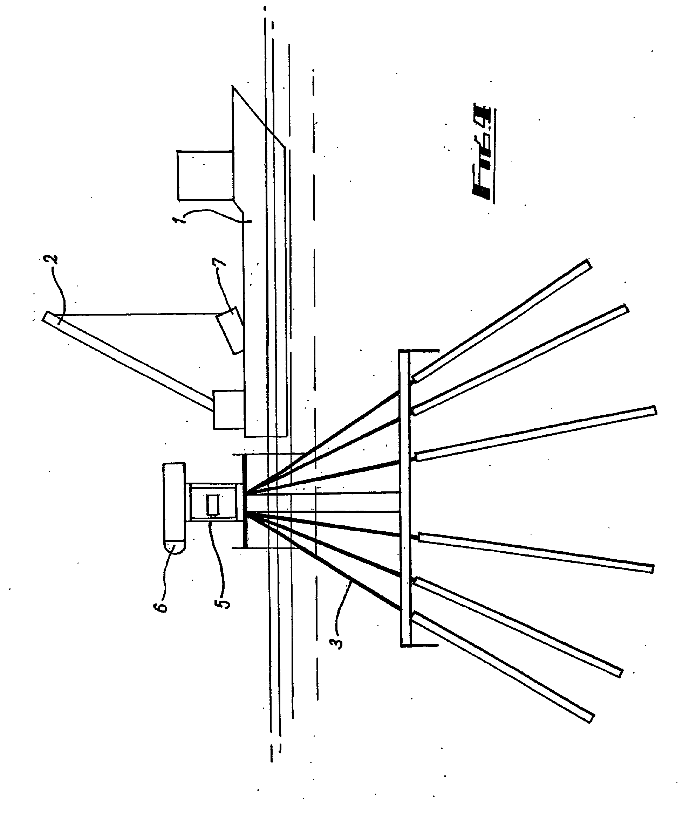

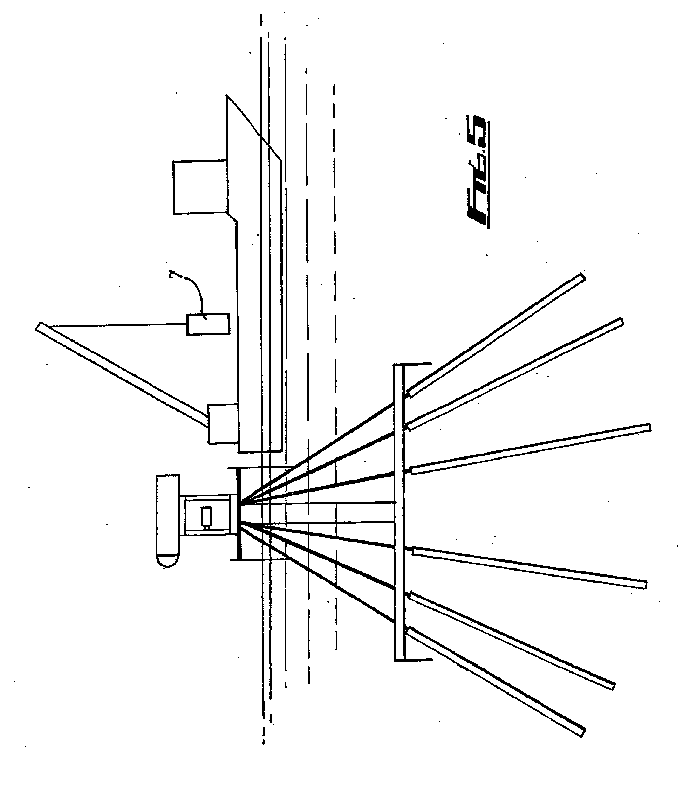

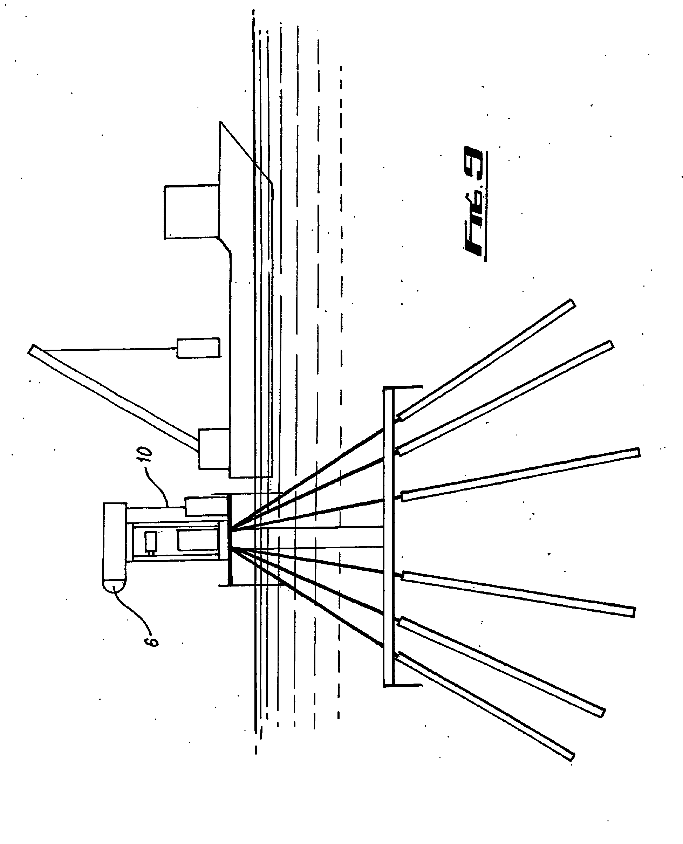

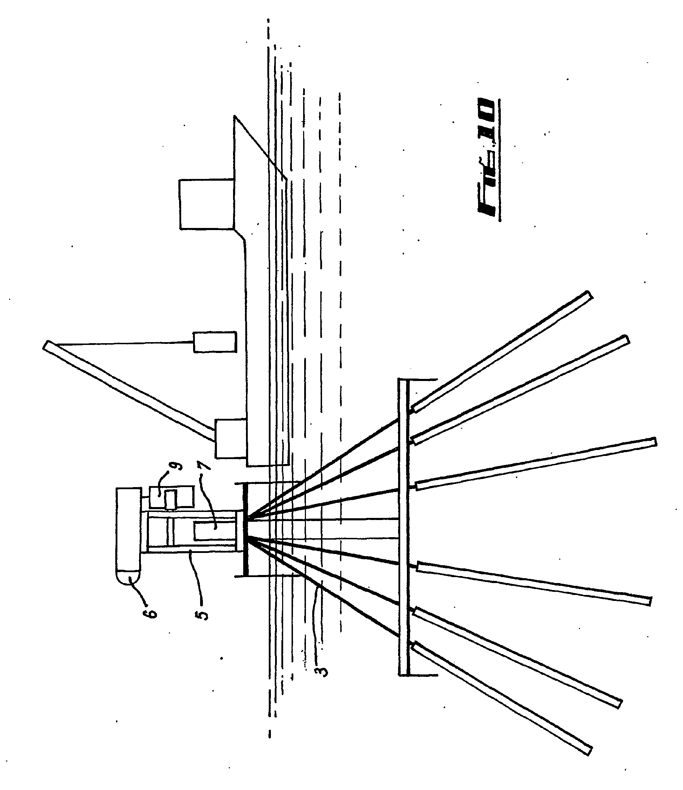

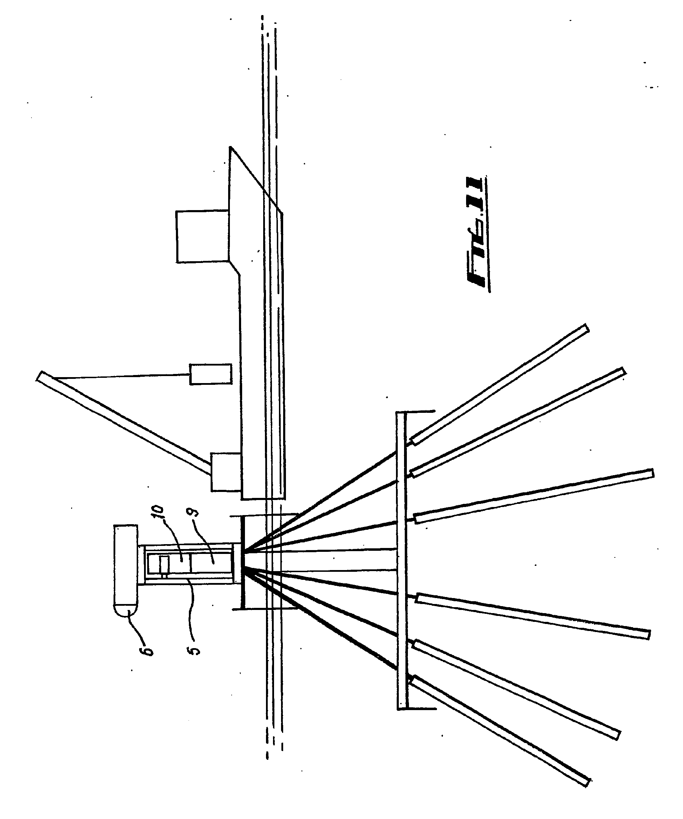

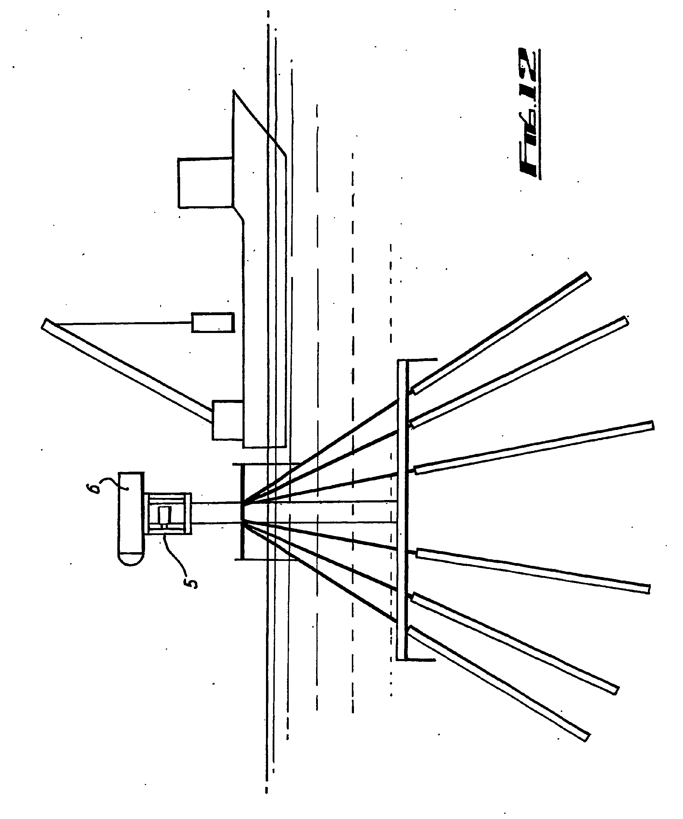

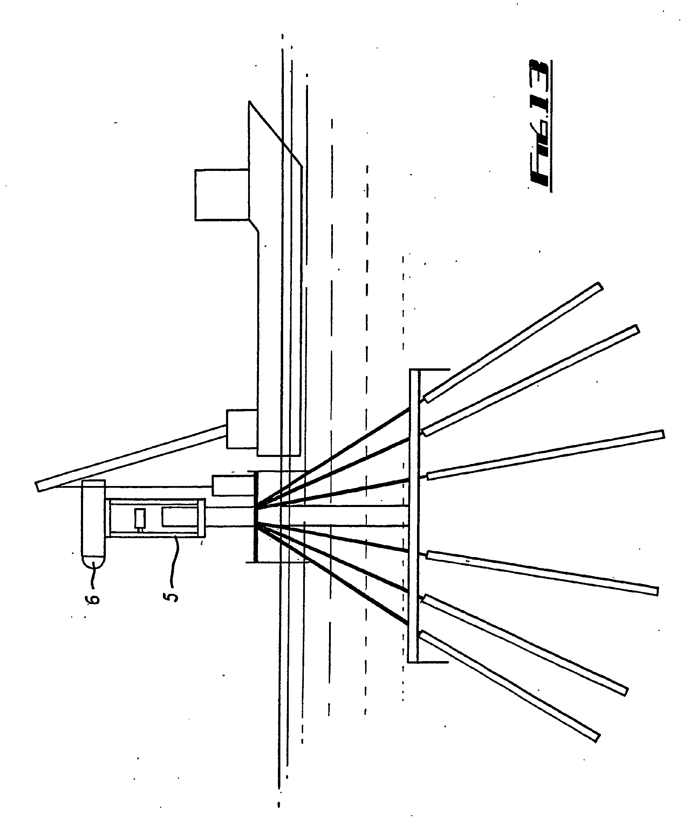

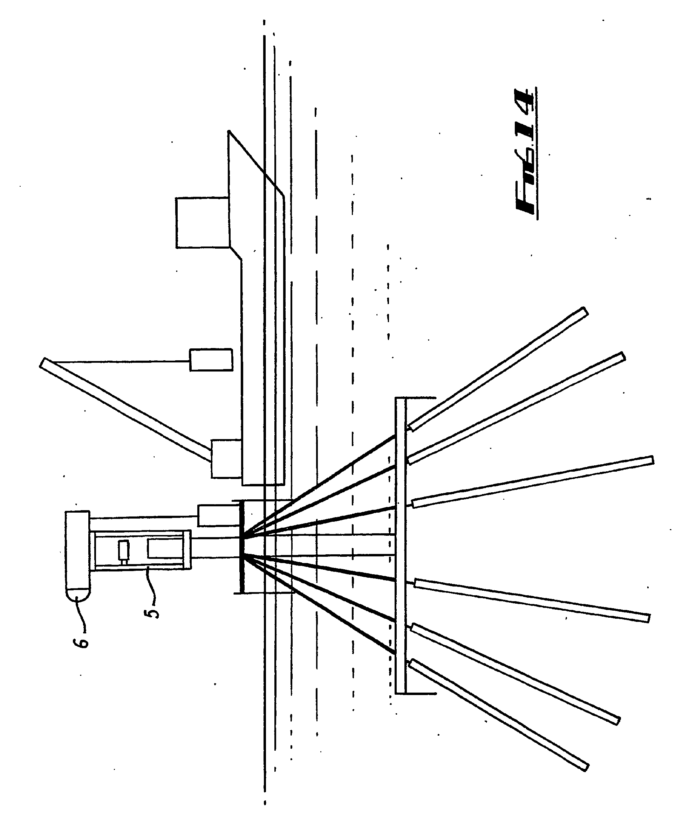

The self-installing wind energy tower, with nacelle and blades can be erected in an onshore and offshore position in a first manner illustrated in Figures 1 to 14. The Figures illustrate the apparatus in an offshore environment, although use in an onshore environment is also possible. Referring firstly to Figure 1, in one embodiment, vessel 1 has a small crane 2 which is used to lift the self installing tower, nacelle and blades onto an installation (working) platform 3. The foundation platform will be secured in position on the ocean bed 4, and tested prior to construction of the remaining parts of the finished wind turbine. The apparatus described in the present Application is particularly adapted for erection on the foundation platform described in the Applicant's co-pending UK Patent Application No 0206569.6 and International Application No GB2003/001159. It is envisaged that the apparatus described in the present invention is suitable for use in both offshore and onshore locations. The apparatus brings significant cost savings by eliminating the requirement for large cranes, both onshore and offshore.

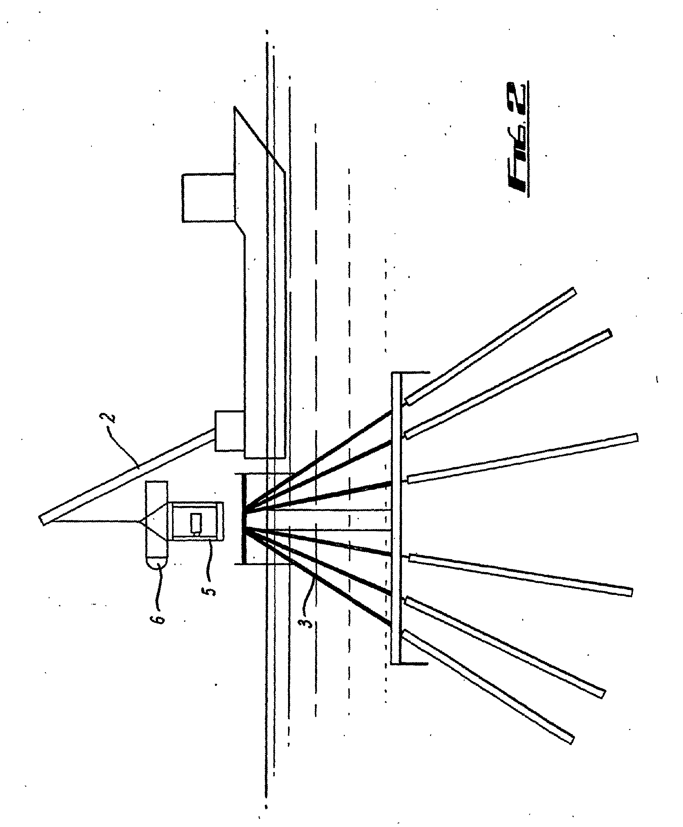

In the first step shown in Figure 2 a jacking crane 5, together with the nacelle 6 of the turbine is transferred onto the foundation platform 3. The jacking crane acts as a motion compensation system when it is initially transferred to the platform with the nacelle on top.
This effectively means that the nacelle can be transferred from vessel 1 onto the foundation platform ready for erection in poorer weather conditions (i.e. worse sea states) than otherwise possible. Thus, offshore work will not be disrupted.

One of the essential requirements for the jacking crane herein described, is that it must have a secure and safe anchorage to the tower. This ensures that the turbine is erected safely and efficiently and allows cranes and other construction operations to be supported from the frame.

The jacking crane, as illustrated in the diagrams, comprises a frame supporting four legs (although the number of legs is not limited to this) which can extend and retract. These are attached to upper and lower grip assemblies that can be moved relative to each other by the actuation of the jack legs. The grip assemblies grasp the tower using arms that fit into pockets in the tower sections. The top works of the device contains winches and a trolley to mechanically handle the tower sections into place under the nacelle for bolting to sections already in place.

The apparatus and method described in the present Application may be used, not only to construct and erect new wind turbine towers, but also to dismantle or carry out maintenance on existing towers. Where the tower is new-build, purpose built attachment points can be provided within the tower sections to ensure anchorage of the jacking crane. However, where the tower is already erected a secure anchorage may be provided either by using fixed attachment points or without fixed attachment points.

In one embodiment a secure anchorage is provided by employing one or more clamps that grip the tower sections by compression and friction alone. Contact pads made of a compliant material such as Polyurethane are brought into contact with the tower section and pressure is applied sufficient to develop the vertical frictional resistance necessary to support the desired loads.

An important aspect of these clamps lies in the fact that adjustment is provided within the clamps and support structure to accommodate changes in the shape of the tower being climbed, and to ensure verticality in the climbing frame at all times. The adjustment should include as a minimum for the pronounced taper currently employed in wind turbine tower designs.

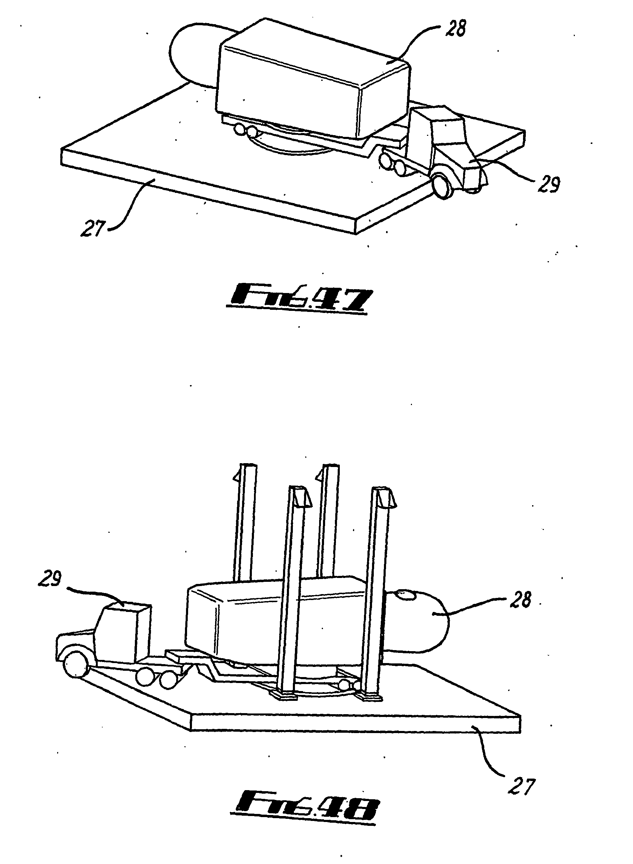

The compliant pads may be mounted on a flexible backing substrate that is tensioned at its ends. To allow for a more even distribution of the loads imposed by the clamp, the flexible substrate should contact the tower in a number of sections. In the embodiment shown in Figures 47 to 58, four equal (quadrant) sections are shown, although it will be appreciated that the number is not restricted.

Each clamp is mounted on an arrangement of struts, ties and beams that can be adjusted to accommodate changes in the tower cross section, and that can be locked to provide a fail-safe operation. Adjustment of the length of the flexible substrate can be achieved by passing its ends around rollers or sprockets that can rotate as the length is increased or decreased. Preferably these sections of the flexible substrate comprise an arrangement of links similar to the tracks of a tracked vehicle, and are also covered with compliant material.
An arrangement of screw-jacks between the sprocket wheels of adjacent sections of flexible substrate allows tension to be applied and the length of substrate to be adjusted whilst allowing an efficient load path of hoop tension within the flexible substrate/sprocket wheel system.

Further more the friction coefficient of the tower/clamp interface can be improved by preparing the relevant sections of tower with high-grip surfaces such as anti-slip paint and glue-on grip strips.

A further safety feature which may be provided is the inclusion of mechanical toothed wedges that can be activated as necessary that engage by a wedging action between the tower and climbing frame.

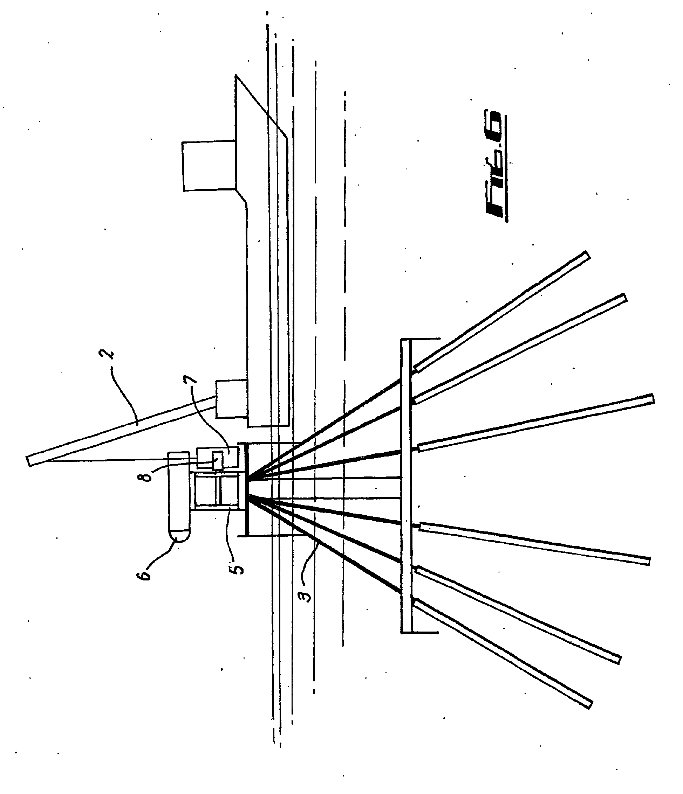

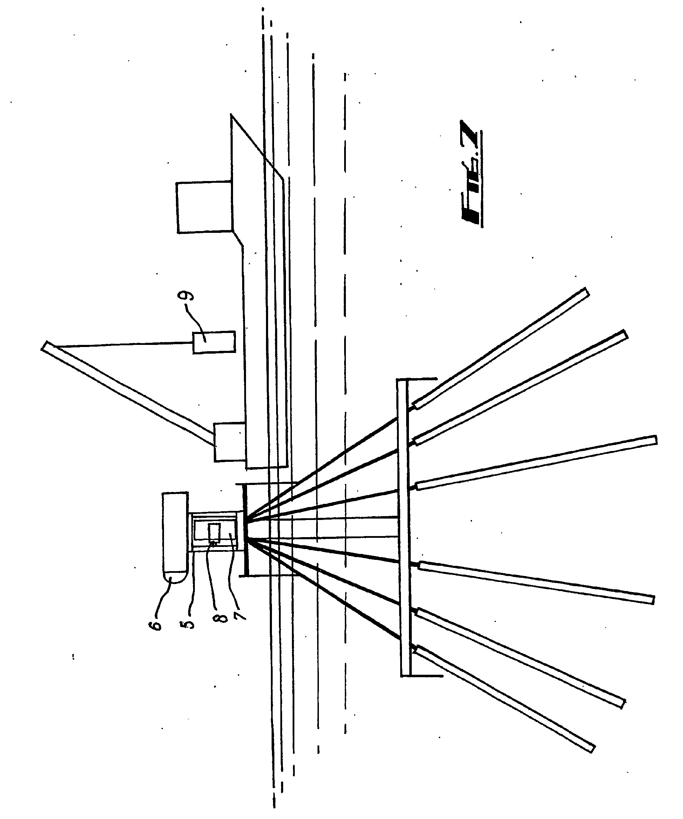

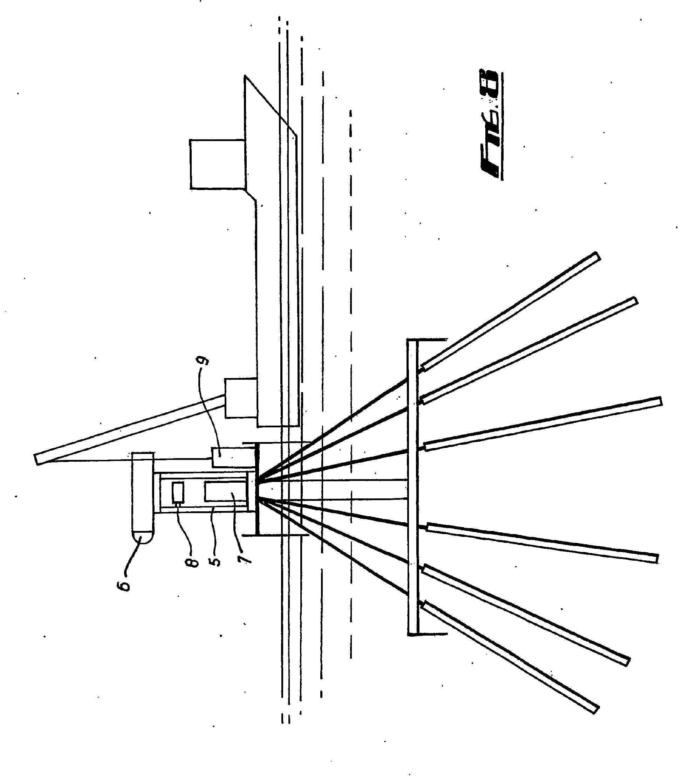

Once the jacking crane 5 and nacelle 6 are in position on the foundation platform 3 the installation tower can be erected. An important aspect of the present invention is that the tower is supplied in manageable sections. These may be around 10 to 25 metres in length, and offshore can be transferred onto the foundation platform in the same manner as the jacking system. As the tower is supplied in sections the vessel 1 can be smaller than conventionally used or proposed for offshore wind farm construction as it will not have to carry or tow a large cumbersome, unitary or two parts pre-made tower unit. As the decks of these vessels are frequently very obstructed and congested in any event, this is a significant advantage. A tower section 7 is transferred onto the platform 3 and can be positioned within the jacking crane using hydraulic means 8 as shown in Figures 6 and 7.
Once first section 7 is in position, a second tower section 9 can be transferred onto the foundation platform 3 as shown in Figure 8.

A crane 10 in the nacelle 6 can be used to perform all the lifting operation after the initial lift of the sections from vessel 1. In a first embodiment this may be achieved by allowing the nacelle 6 to rotate while it is temporarily installed on top of the jacking crane 5. In an alternative embodiment a temporary boom (not shown) is attached to the jacking crane 5. In either case the winch 10 can be located within the nacelle 6. A boom may also be required to enable the crane to reach over the side of the foundation platform to be able to lift the tower sections (located around the side of the foundation platform) and also the blades in the supply boat. The boom may require a counterbalance. This can be achieving using a seawater ballast, again removing the requirement for a large lift.

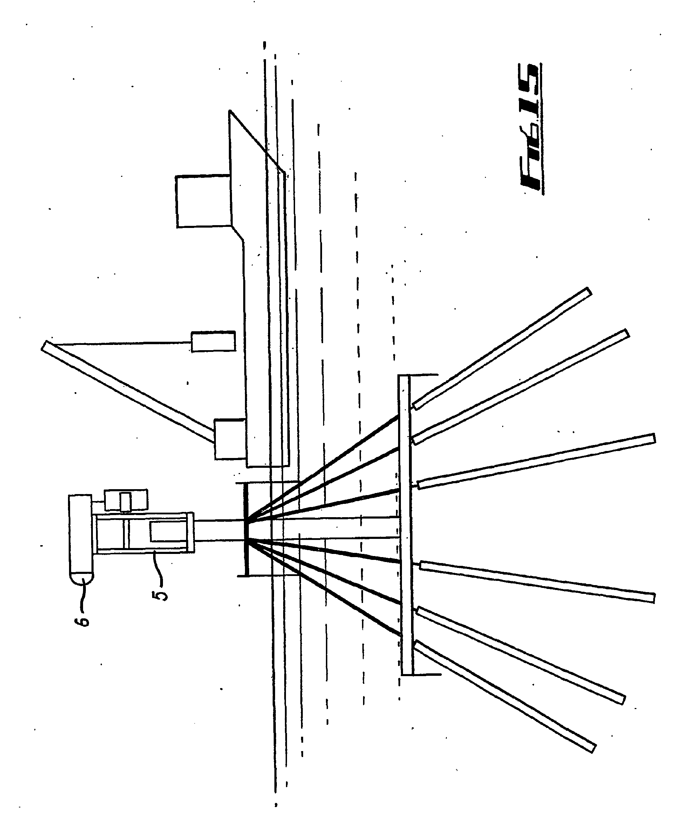

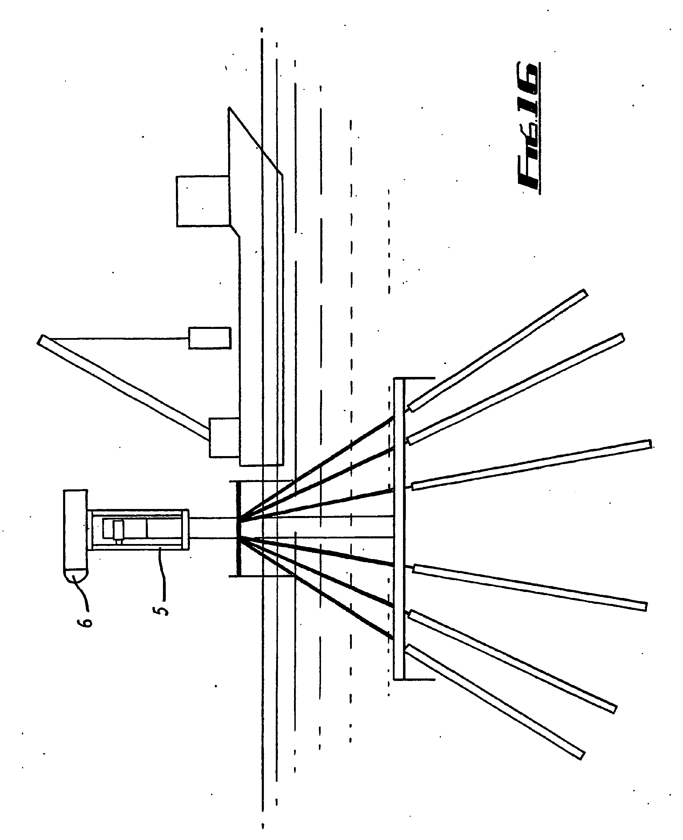

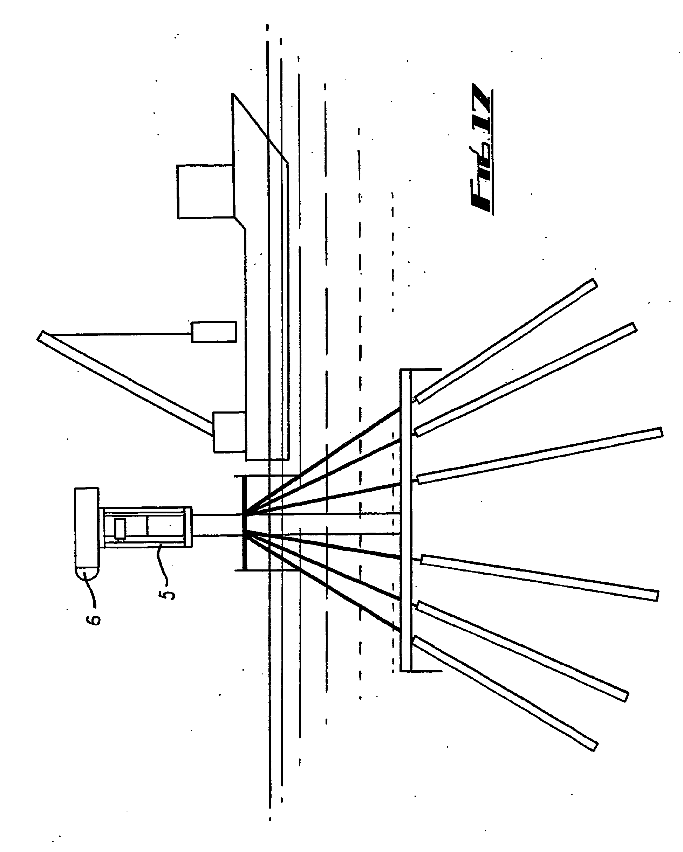

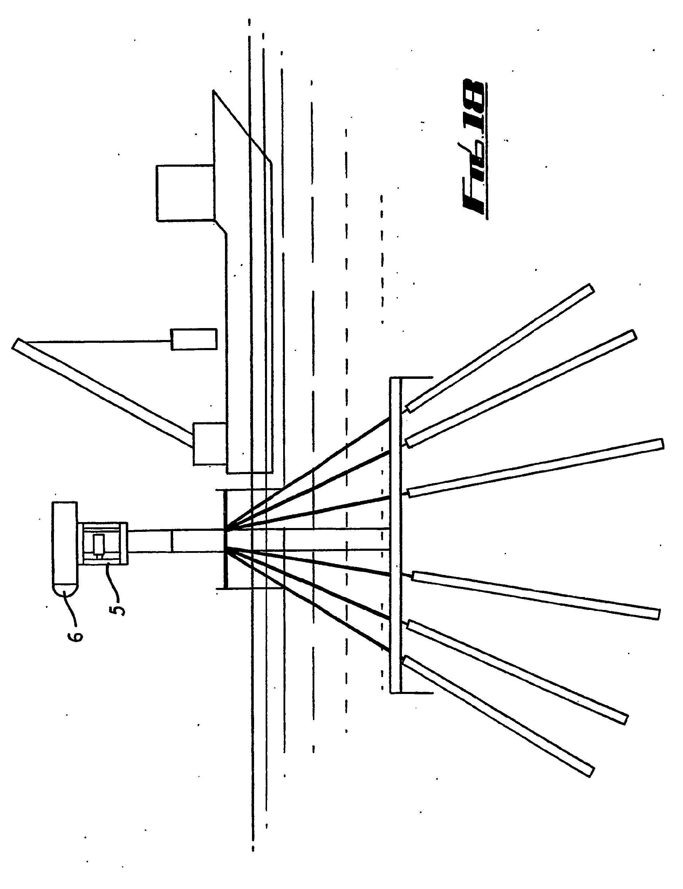

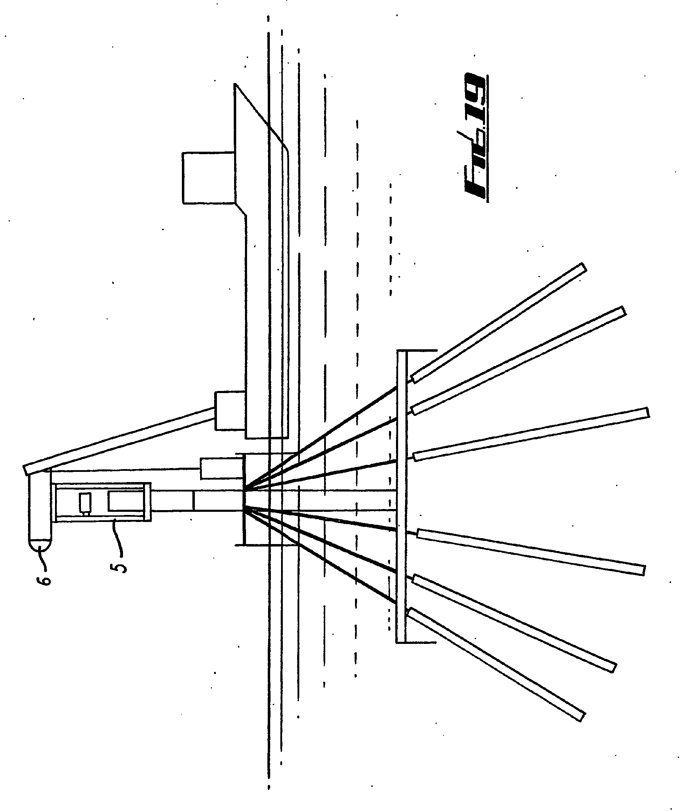

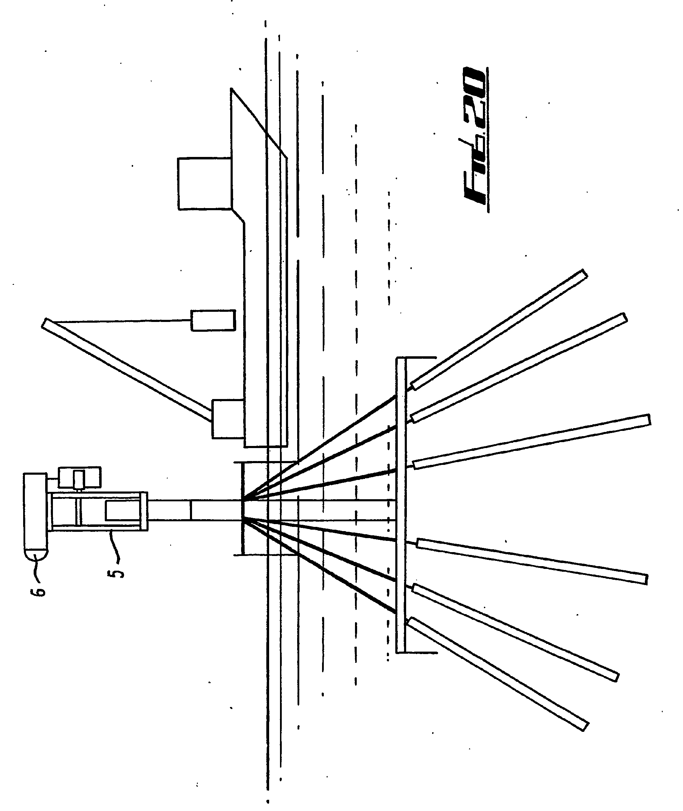

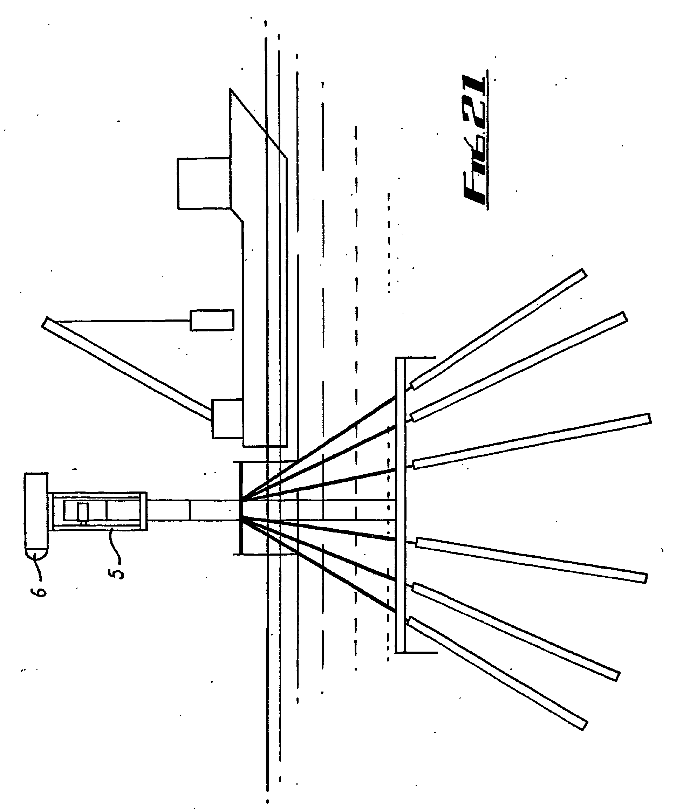

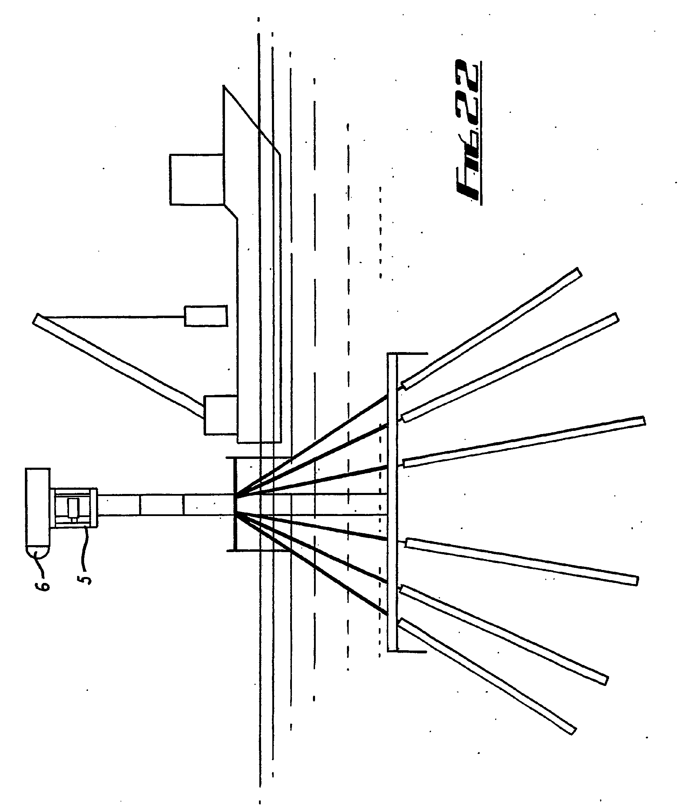

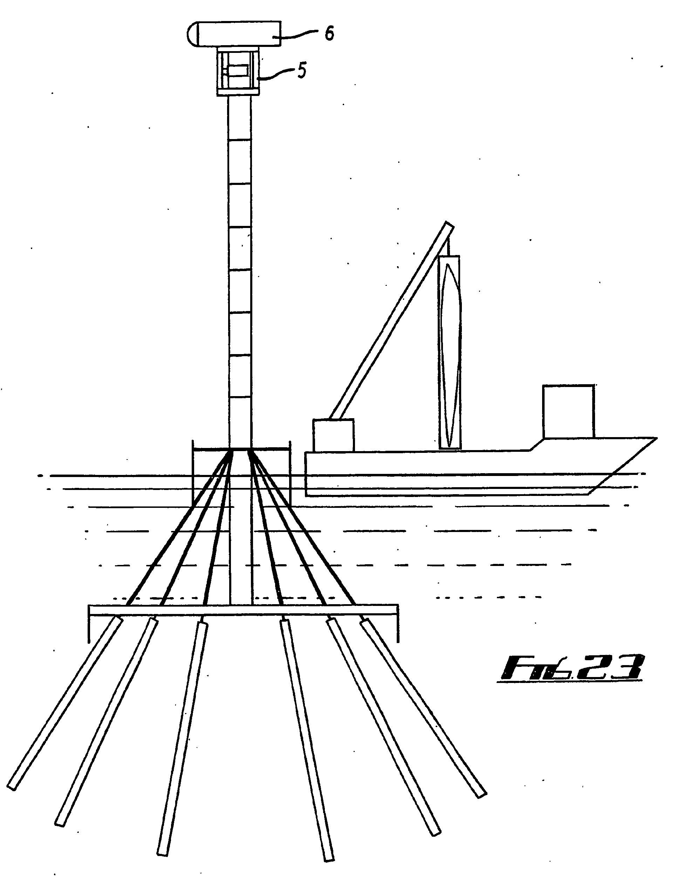

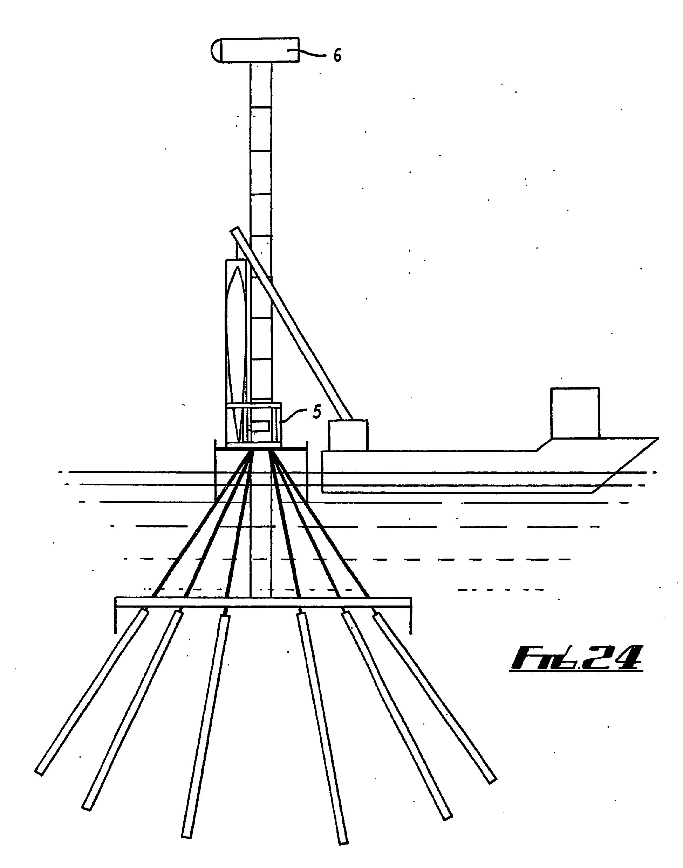

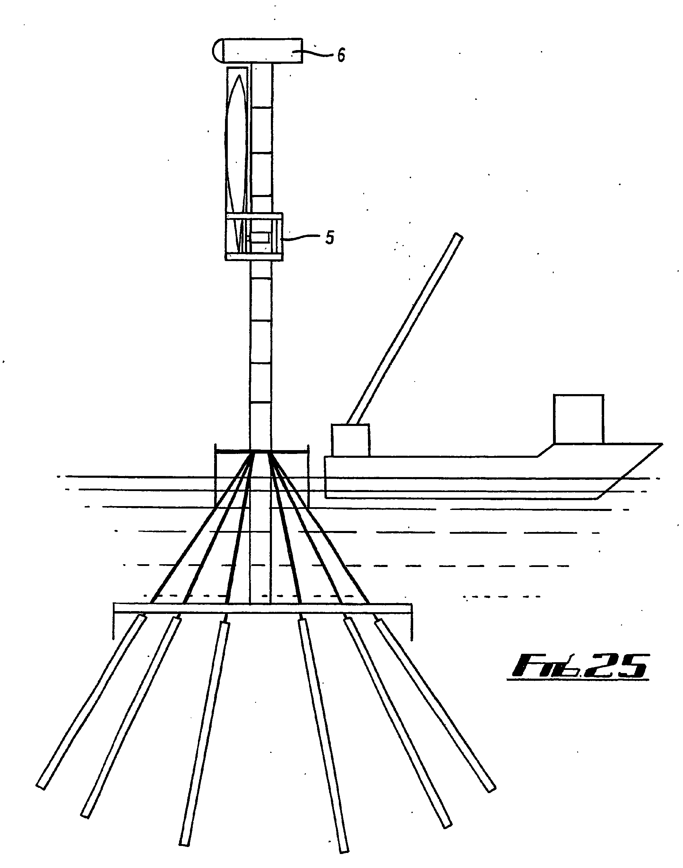

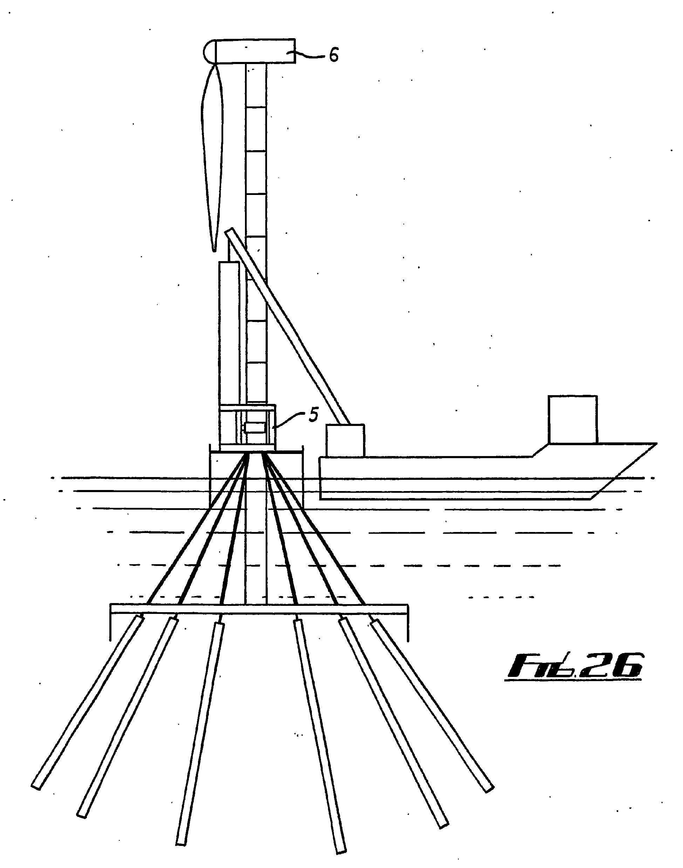

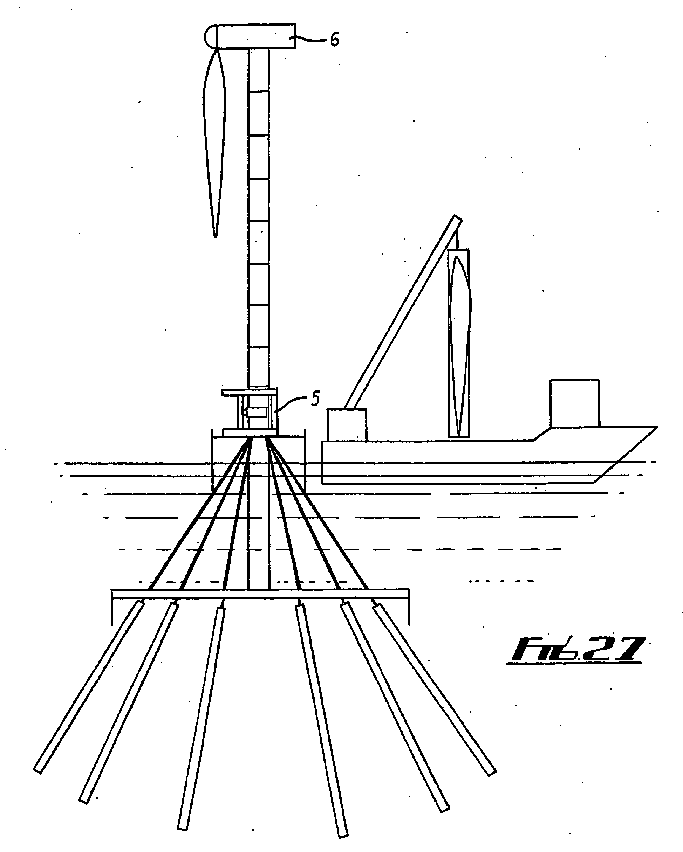

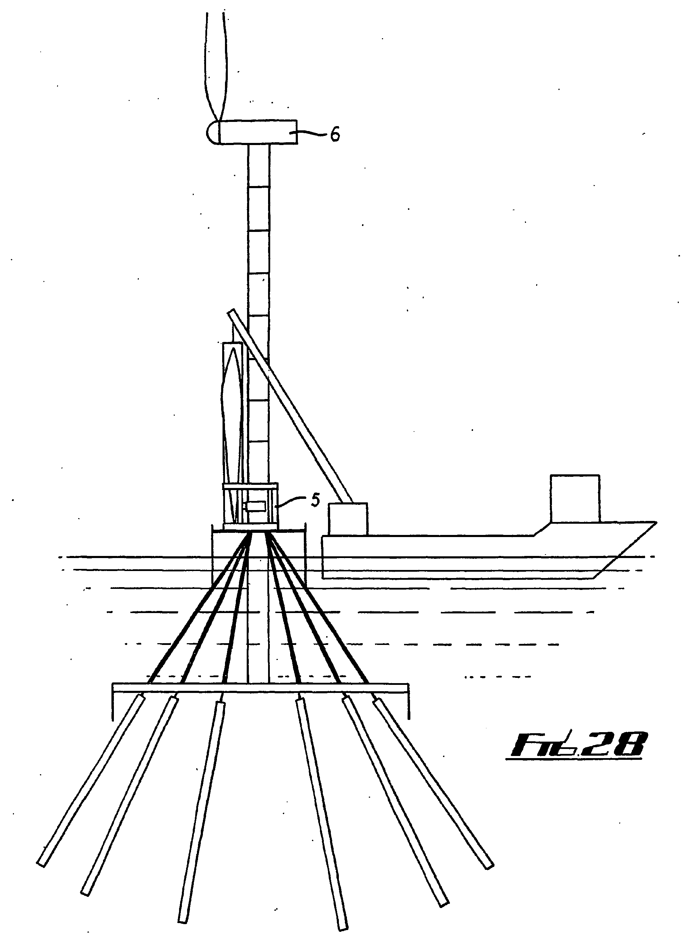

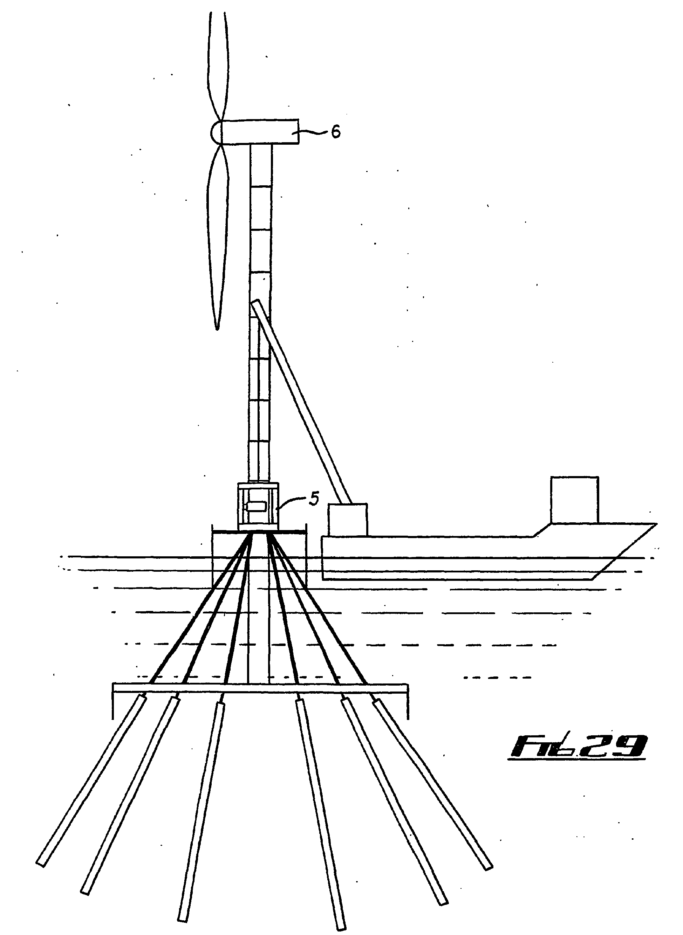

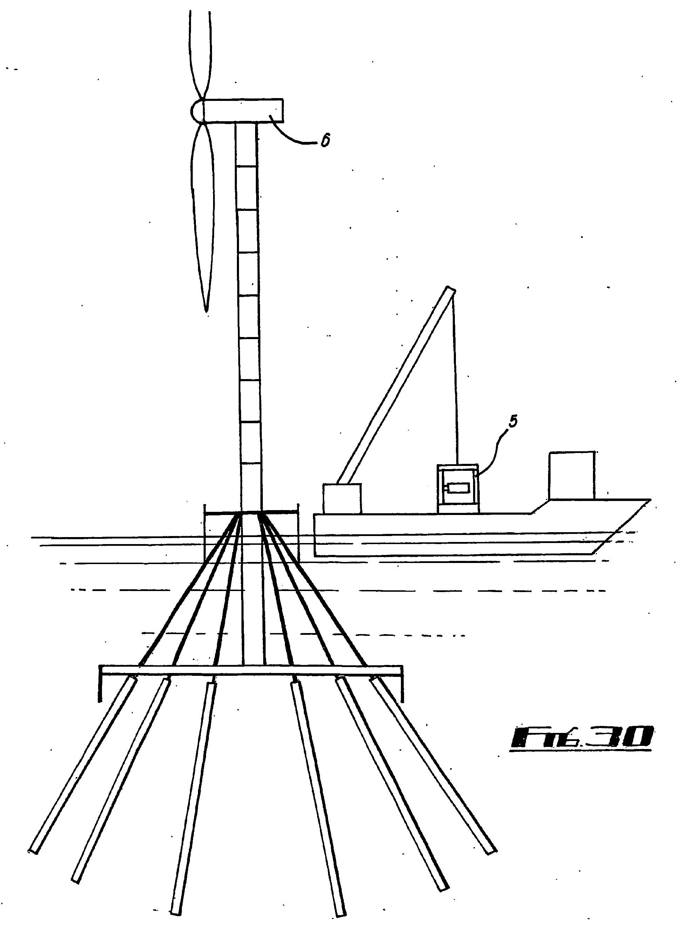

The jacking crane 5 may simply be considered as a device for safely climbing the tower as it is constructed from the tower sections. In other words, the jacking crane climbs the tower during construction. Initially it is used for installing tower sections as shown in Figures 7 to 23. The jacking crane is also used to erect the nacelle and then the blades 11 and 12 as shown in Figures 24 to 30. Whilst the depicted embodiment uses two blades it will be appreciated that the number of blades mounted on the tower is not restricted to this. The jacking crane 5 moves up the tower as it is erected and is used to install a section of the tower on top of those section which have previously been installed, using the crane 10 of the nacelle 6, which lifts the sections up to the jacking crane 5. The jacking crane 5 can subsequently be used for inspection (e.g. non-destructive testing of the tower and blades to look for cracks), painting, replacing parts (e.g. blades) and any form of maintenance requiring access up the outside of the tower. All these different activities will require specially designed tools and lifting baskets that have a common interface so they can simply by plugged into the jacking crane.

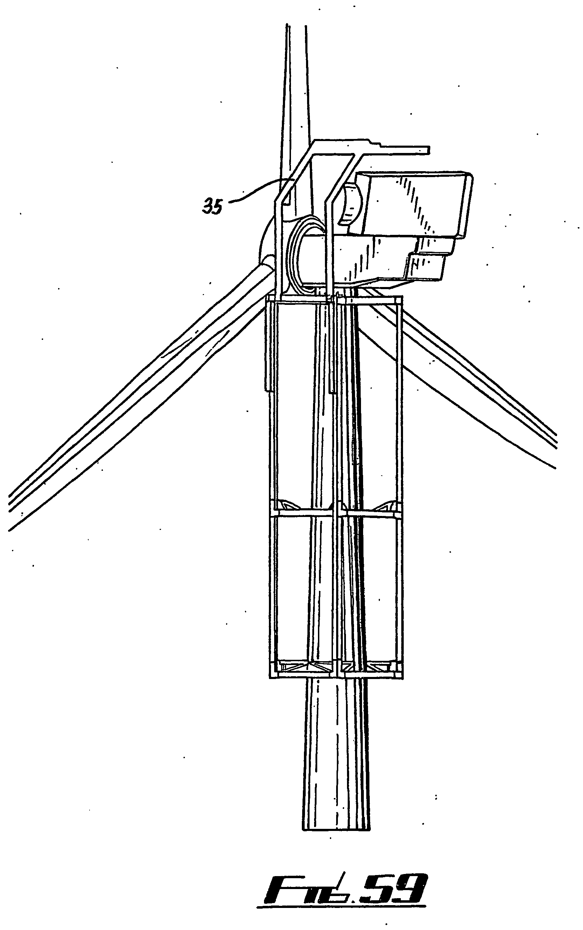

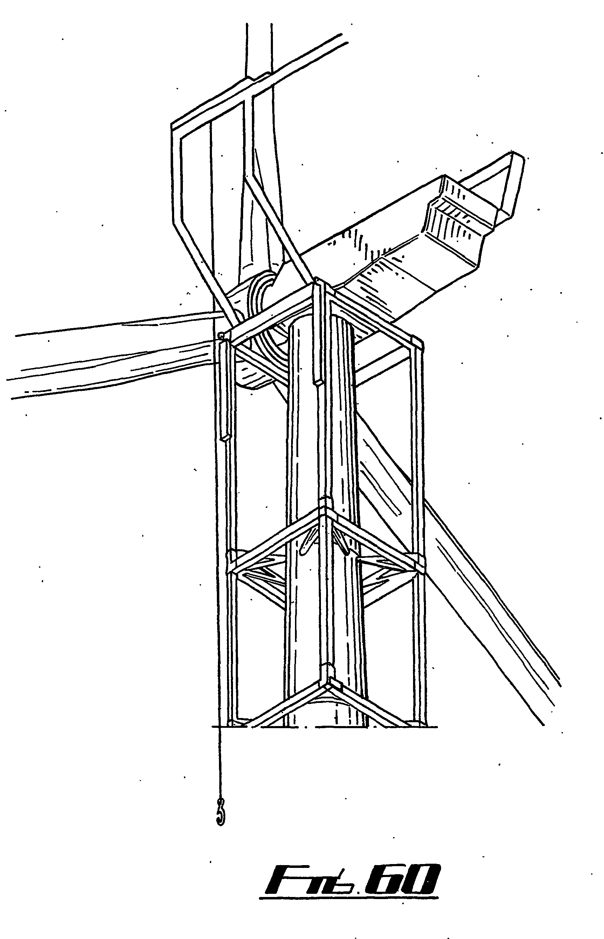

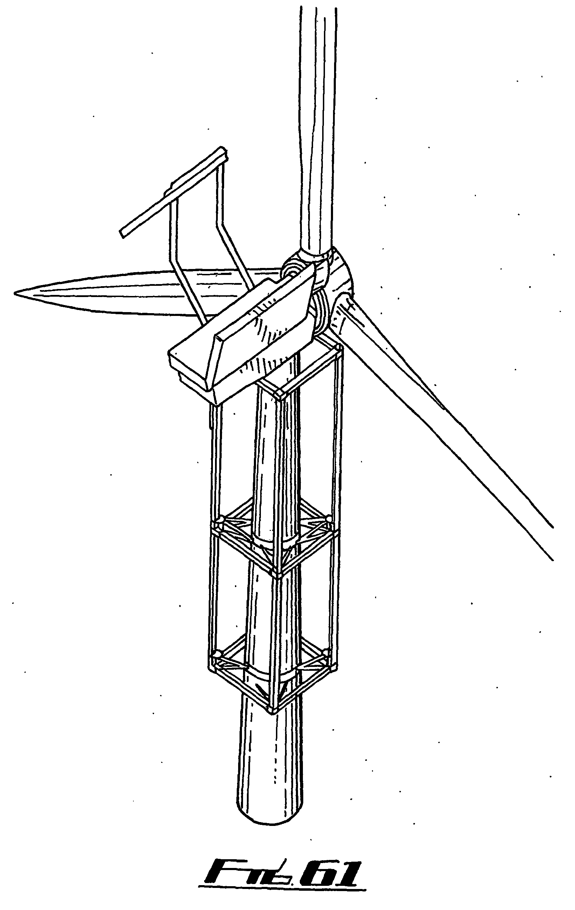

The jacking crane 5, is anchored and used to combine the tower sections that make up the tower. The jacking crane 5 carries a framework 35 such as an `A' frame (tool) or knuckle boom crane (tool) capable of plumbing or reaching inside the nacelle 6 so as to enable nacelle components to be removed for maintenance or to be replaced completely. This is shown in Figures 59 to 61. In figure 59 the "A" frame has a runway beam which is plumbed over the nacelle centreline.

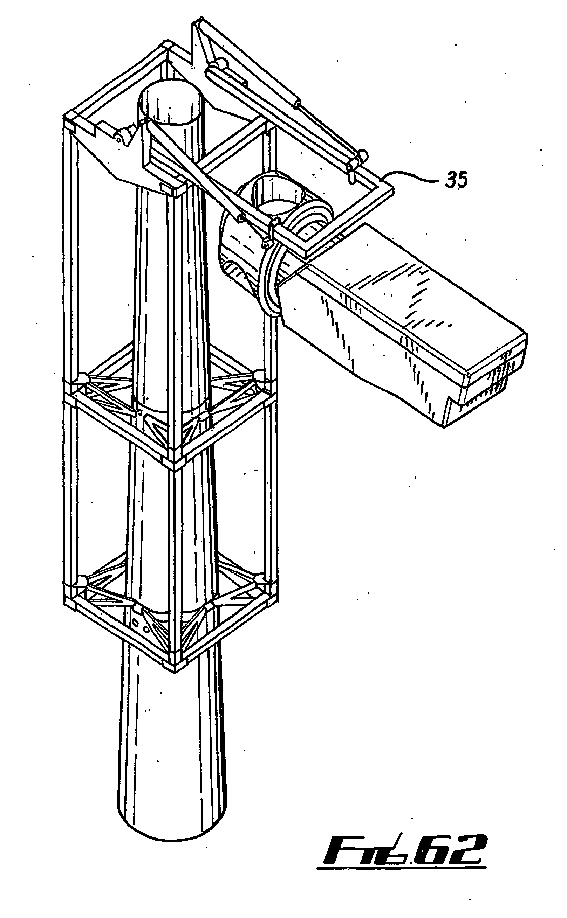

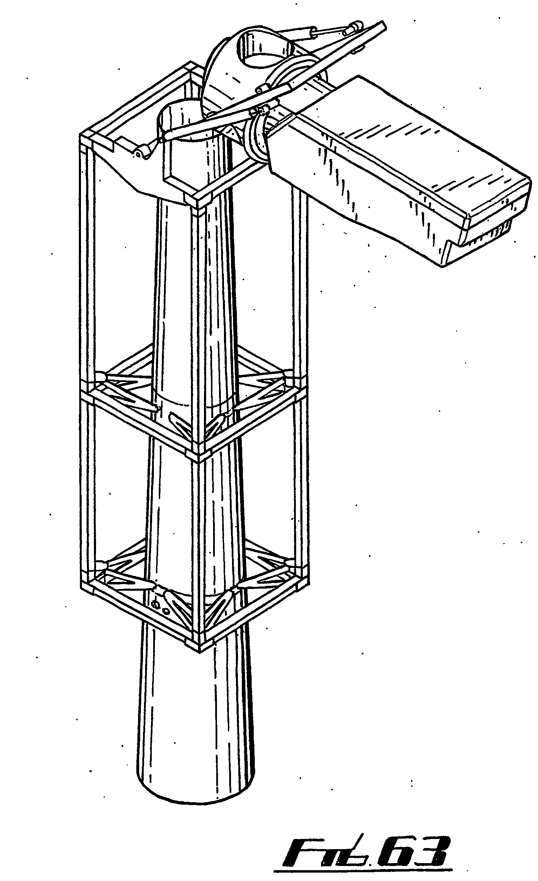

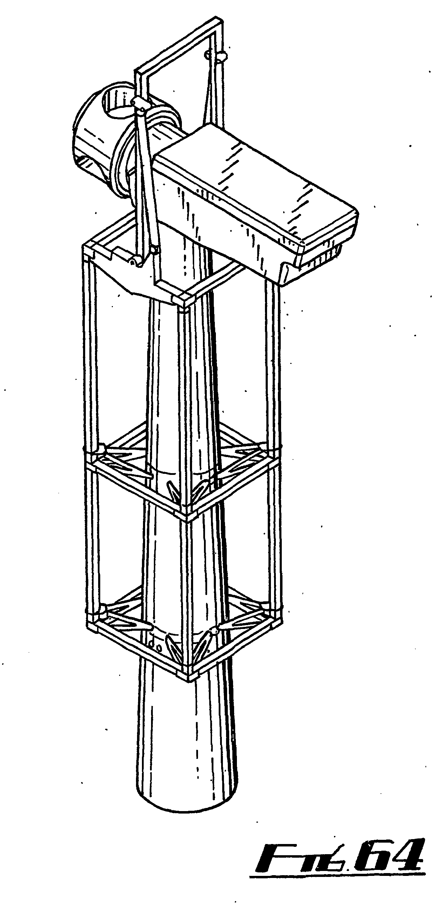

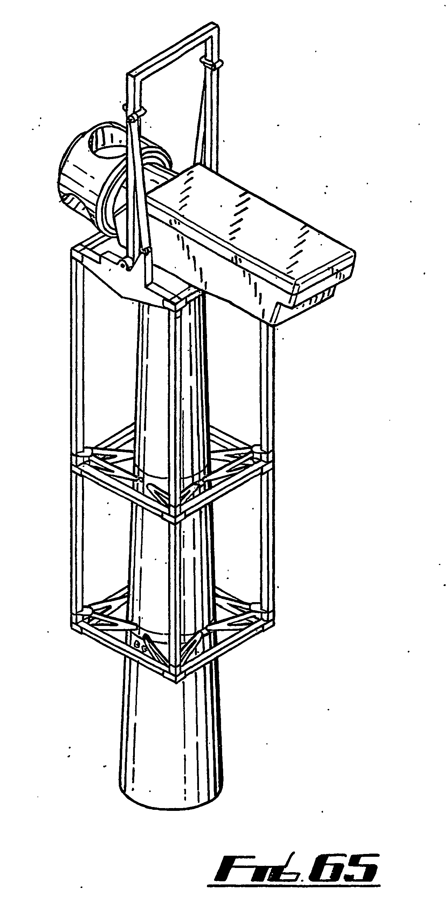

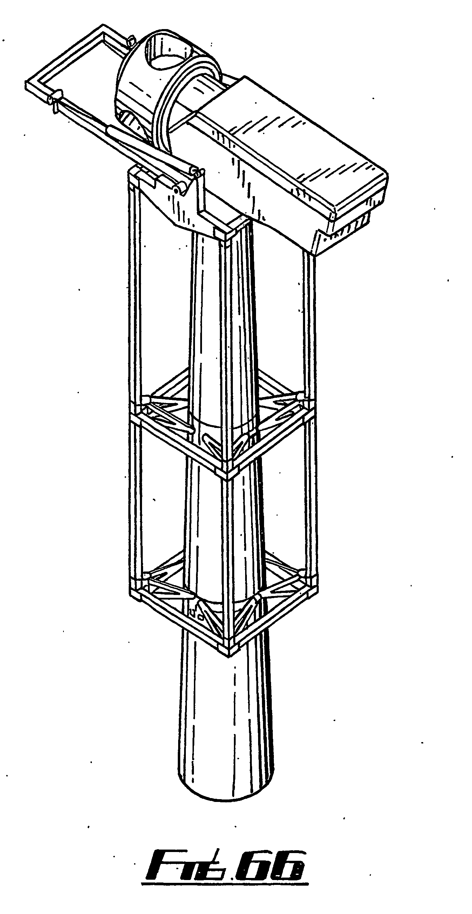

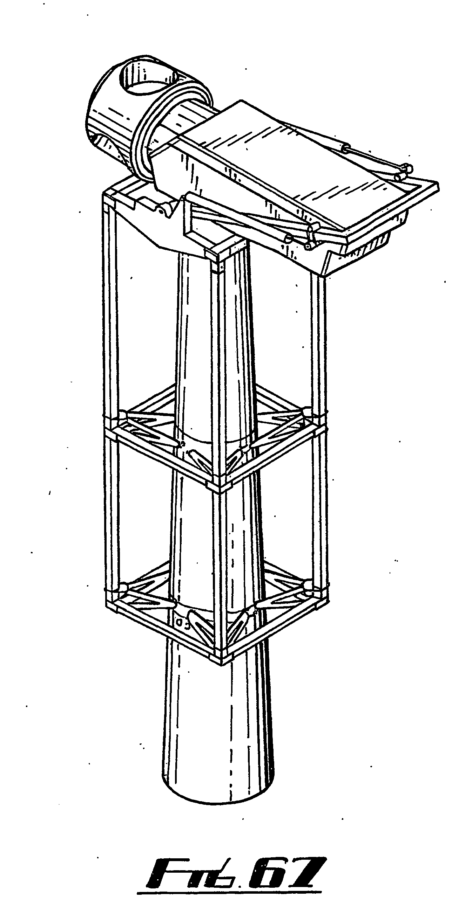

In an alternative embodiment the jacking crane may carry an `A' frame that is capable of lifting the assembled nacelle or of lifting the largest sub assemblies of the nacelle such that the nacelle is lifted after the tower is completed instead of being carried by the jacking crane during installation of the tower sections (as shown in Figure 63). This alternative "A" frame configuration can also be used for maintenance and it may need to be extendible to allow removed components to be lowered passed to back of the nacelle. This is shown in Figures 62 to 67.

The advantage of using an "A" frame to install the nacelle, rather than lifting the nacelle with the jacking crane, is that it allows for much longer hydraulic rams in the jacking unit. This is because the "A" frame is much lighter than the nacelle and the reduced buckling loads then allow greater extension, providing sufficient clearance for full length tower sections to be installed. It is likely that the tower will not need to be modified significantly when compared with conventional tower installation using a crane.

The tower sections themselves are typically air and water-tight and in one embodiment suited to offshore applications may actually be attached to the foundation platform 3 when it is floated to position. In this manner they may be used to control buoyancy - i.e. an integral part of the installation process. The tower sections can be flooded when the platform has reached location. This may aid installation of the platform by providing added weight.

The jacking crane 5 has a fail-safe mechanism that prevents it from becoming detached from the tower under construction and falling. The jacking crane may also be used for maintenance purposes and to provide welfare facilities for construction and/or maintenance personnel.

The jacking crane can be connected to a variety of interface tools and thus adapted for multiplicity. For example, the jacking unit may be adapted to carry tools, which are used for inspection and/or replacement of the blades, nacelle or tower sections. The jacking crane may include an access platform and a variety of tools.

It is also possible that the erection process described herein can by automated to a significant degree. This may be achieved using remote control and further improves safety and reduces costs. The design of the self installing tower facilitates maintenance and decommissioning works and thus is particularly useful for inspecting blades and replacing if necessary.

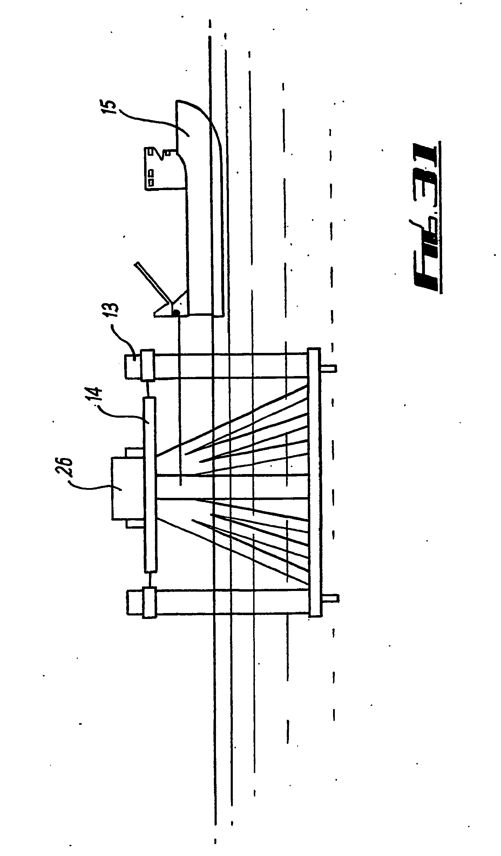

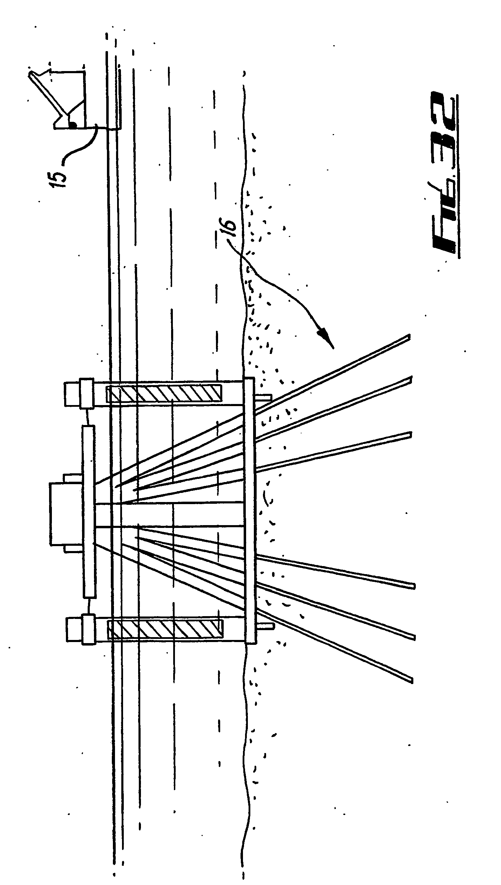

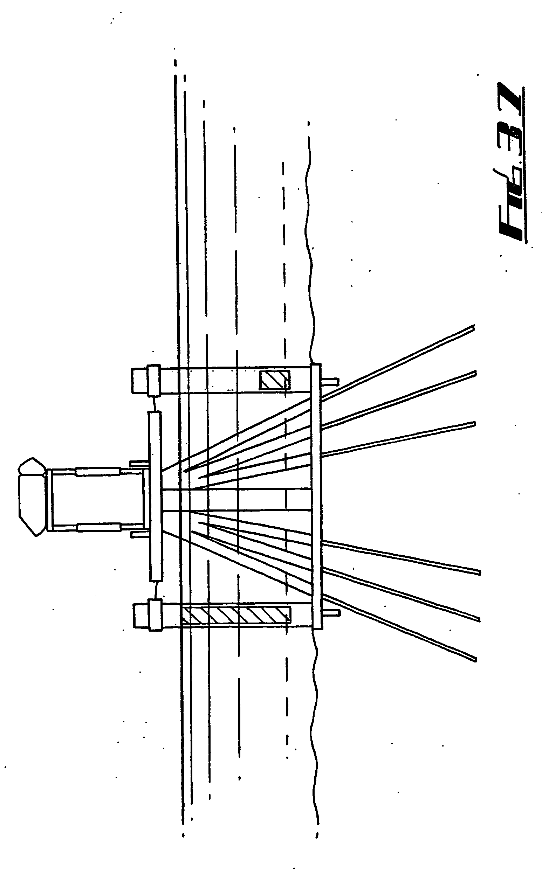

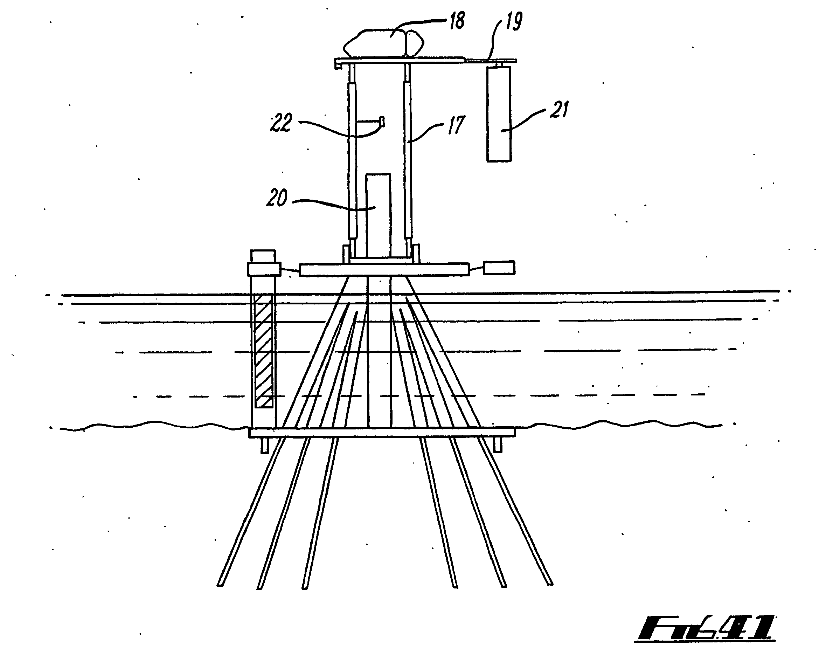

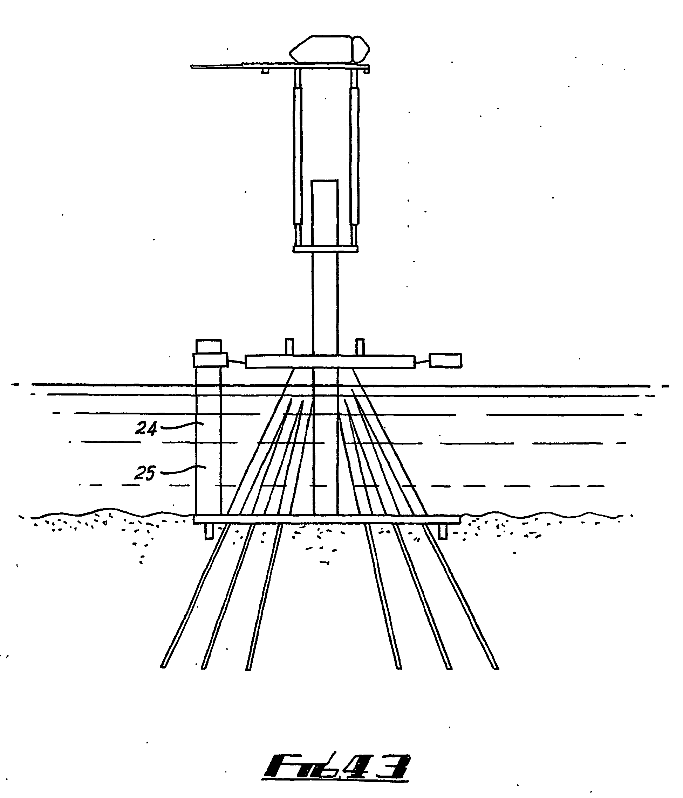

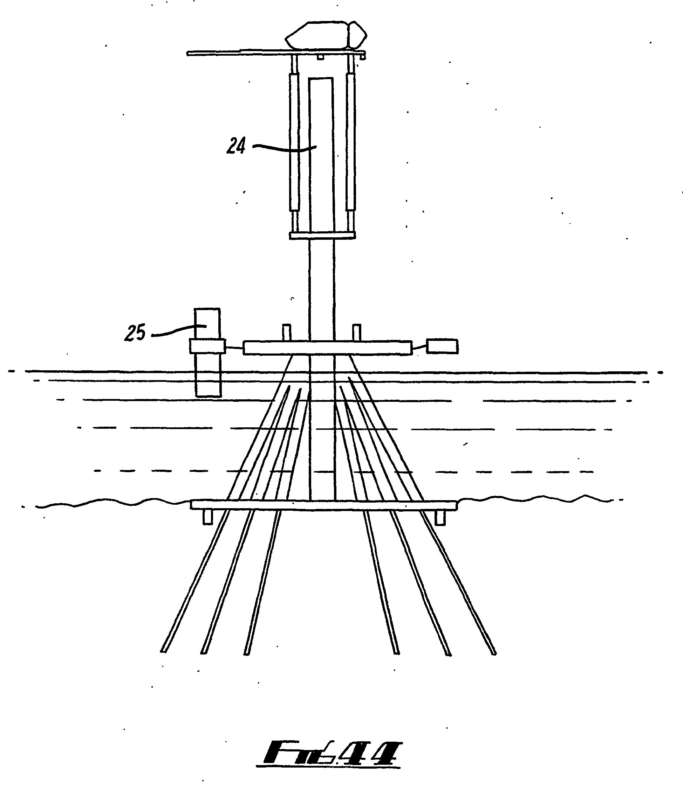

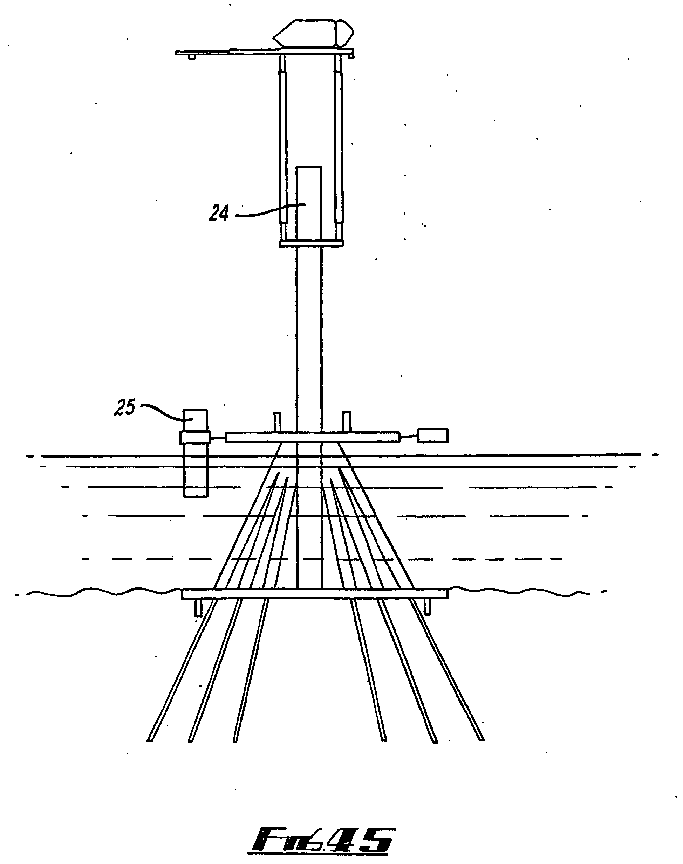

In a second embodiment of the present invention, depicted in Figures 31 to 46, tower sections 13 are pre-mounted or attached onto an foundation platform 14, and towed into an offshore position by a transportation vessel 15. In this embodiment, it is of a particular advantage that,the tower sections 13 are air and water-tight and buoyant, and thus help transportation of the foundation platform to its offshore position. Once the foundation platform has been towed to its position, it is anchored 16 onto the seabed, and the transportation vessel 15 will depart from the area. As the capital and operational costs of these vessels make them hugely expensive, it will be appreciated that this is a significant advantage over existing methods.

In a preferred embodiment, the foundation platform is of the type described in the Applicant's co-pending UK Patent Application No 0206569.6 and International Application No GB2003/001159, and is anchored to the ocean bed in the manner described in these earlier Applications.

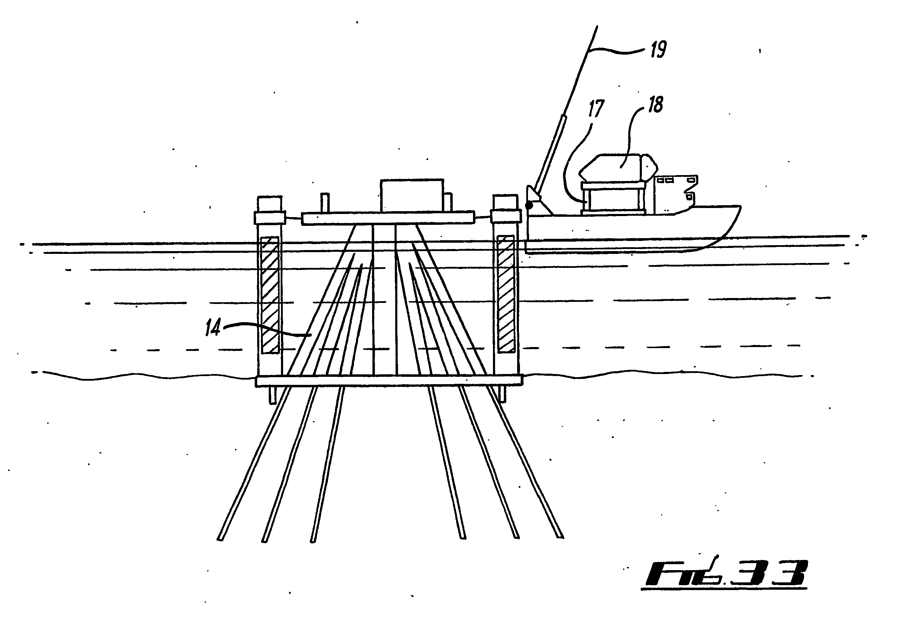

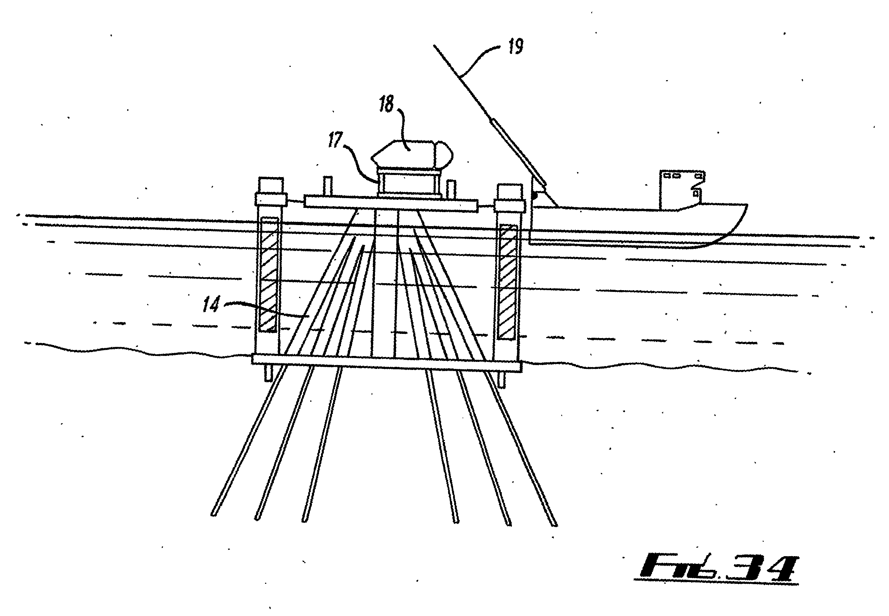

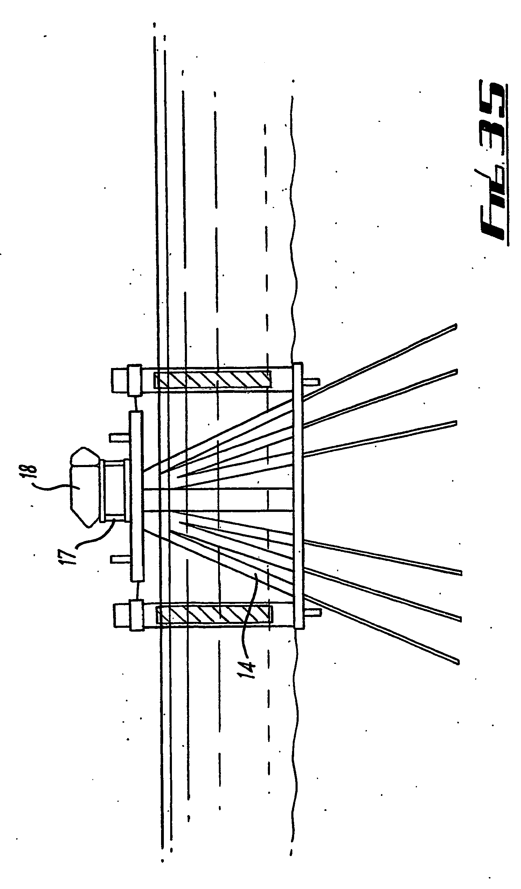

Referring to Figure 33, once the foundation platform has been anchored onto the seabed, a transportation vessel carrying the jacking cranes 17 and nacelle 18 arrives. A transportation vessel has a crane 19 which can be used to lift the jacking crane 17 and nacelle 18 onto the foundation platform, as shown in Figure 34. The transportation vessel may then be removed, as shown in Figure 35, leaving the foundation platform with the entire apparatus required to install a wind turbine. Erection of the wind turbine may be fully operated and may be controlled by remote control. Advantageously, the following steps can be carried out after the transportation vessel 15 has been removed, thus greatly reducing costs.

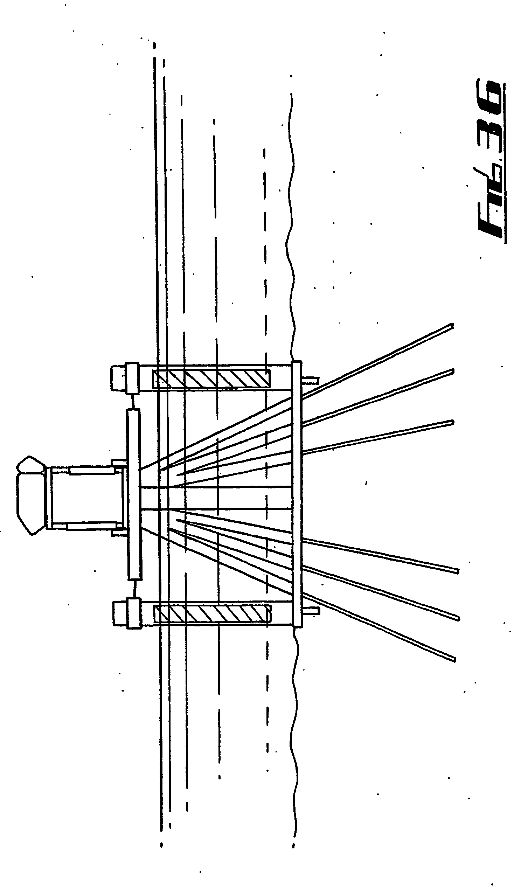

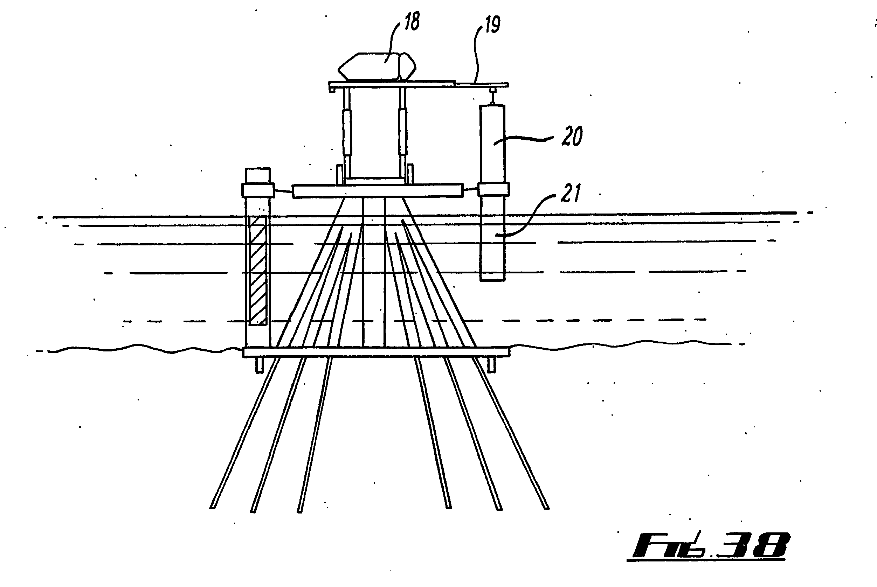

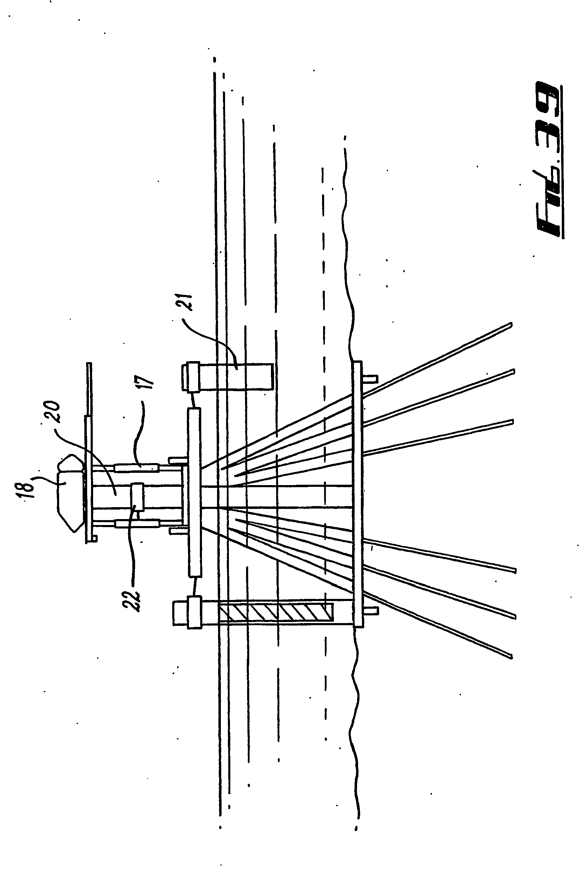

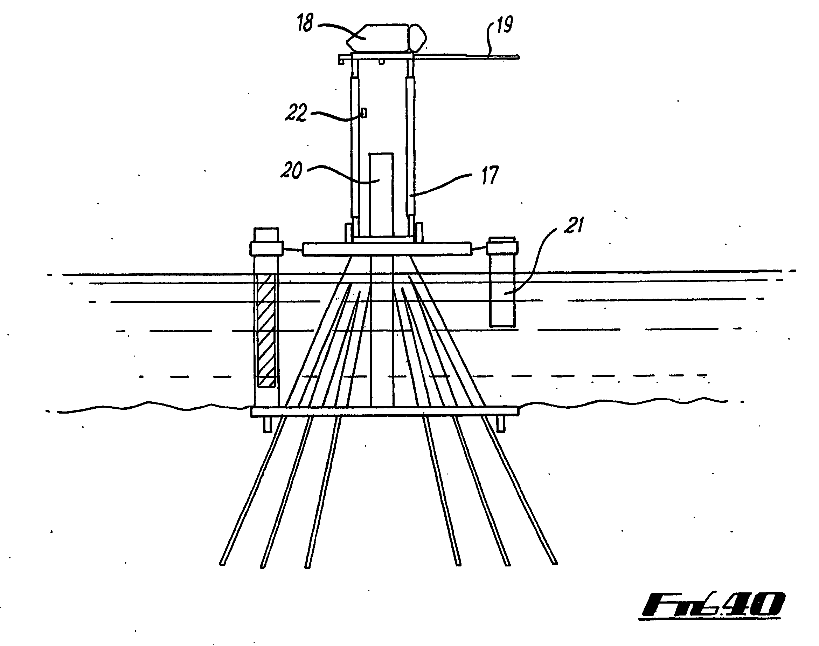

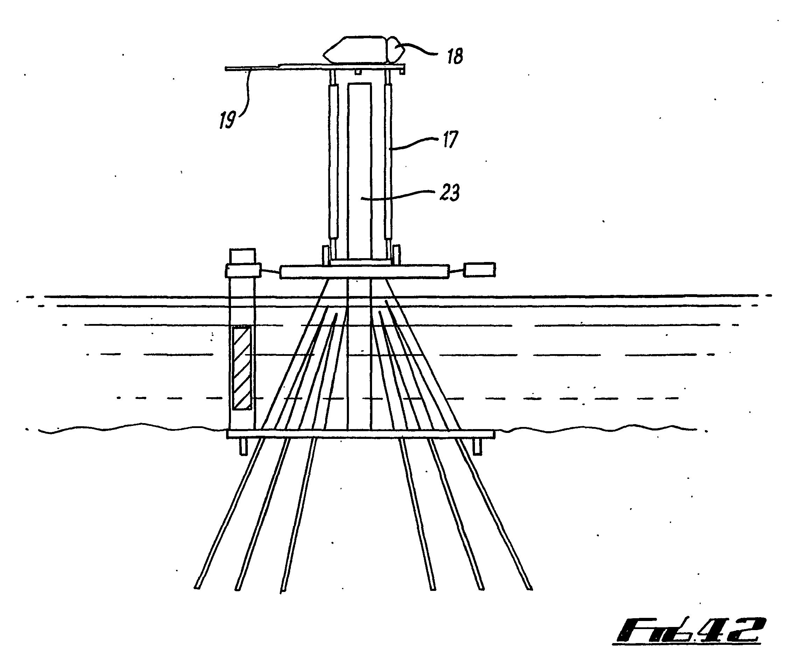

Referring now to Figures 36 to 46, the jacking crane 17 is extended on the foundation platform 14, thereby lifting nacelle 18, as shown in Figures 36 to 37. Nacelle 18 has a winch or crane 19 which is activated and used to winch up tower sections 20 and 21 from their location on the foundation platform 14, as shown in Figure 38. From the position shown in Figure 38, tower section 20 can be moved into position within the jacking crane 17 and in the centre of foundation platform 14 using hydraulic moving part 22, as shown in Figure 39.
Once tower section 20 is in position on the foundation platform within the jacking crane 17, the jacking crane can be further extended, as shown in Figure 40. The crane or winch 19 can thereafter be used to winch up tower section 21, as shown in Figures 40 to 41, and then moved into position within the jacking crane 17 on top of first tower section 20 by a hydraulic moving part 22. Thus, tower sections 20 and 21 are transferred into position within the jacking crane 17, as shown in Figure 42 to produce the beginning of turbine tower 23.

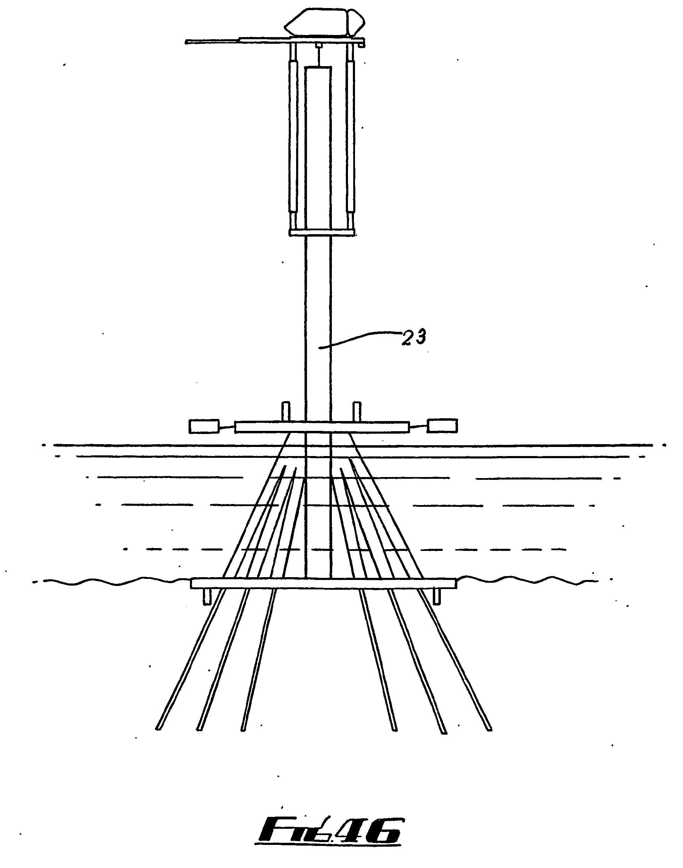

This process can be repeated using further tower sections, as shown at 24 and 25 in Figures 42 to 45, until the complete tower 23 is erected, as shown in Figure 46. Following erection of the tower 23, the turbine blades can be erected in the manner previously described.

It will be appreciated that whilst the depicted embodiment for tower sections 20, 21, 24 and 25 are illustrated, the number of tower sections is not limited to this.

It is also recognised that an alternative option is to load or attach not only the tower sections, but also the jacking crane and nacelle onto the foundation platform 14 before it is towed into a location by transportation vessel 15. This will completely eliminate the need for the transportation vessel to be present near the foundation platform at any stage after the initial towing process, and will greatly reduce costs. In this option, the size of the foundation platform may be increased, or may comprise a temporary extension to allow room for a drilling unit 26 to anchor the platform, together with the remainder of the apparatus.

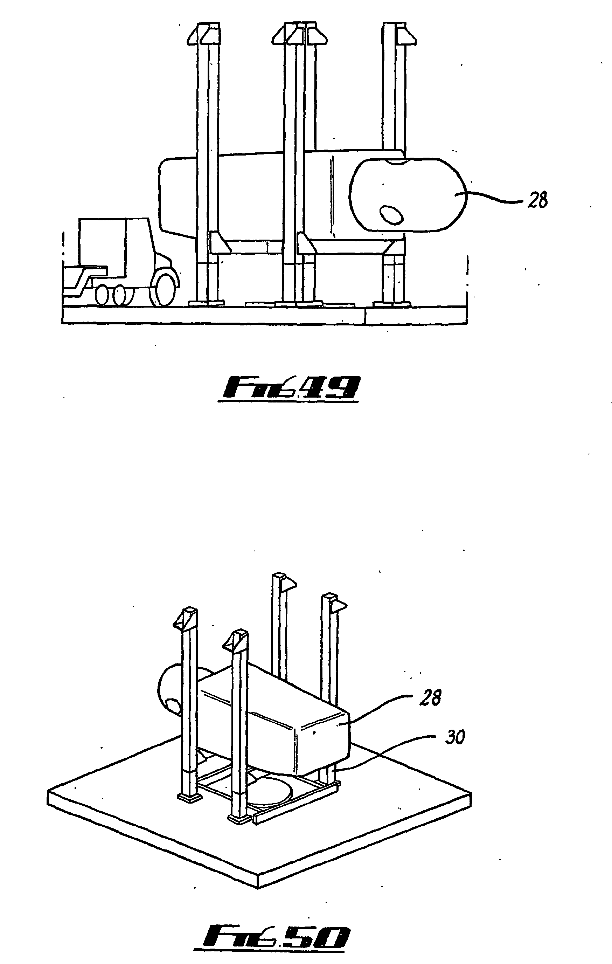

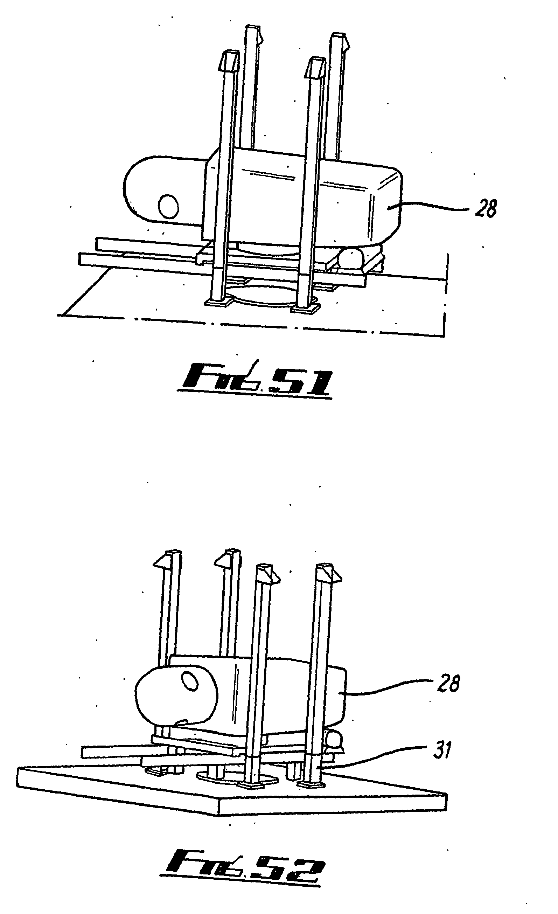

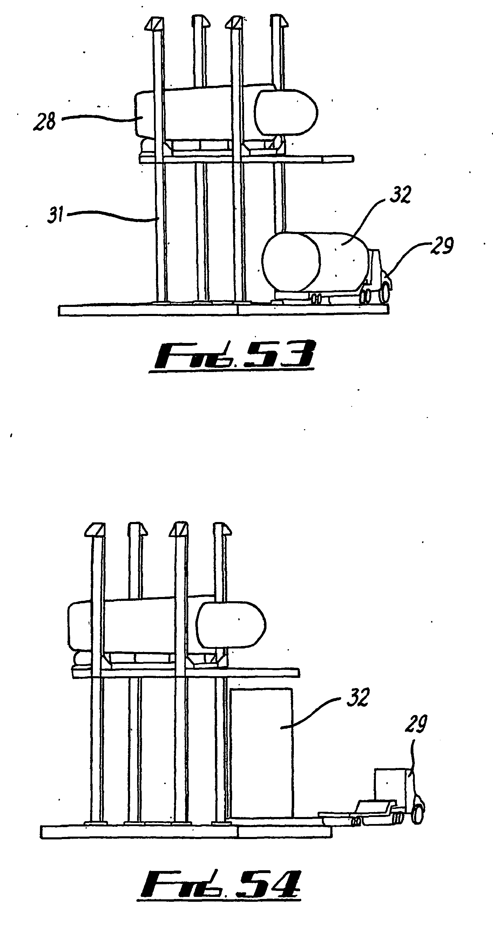

Referring now to Figures 47 to 58 a further method of installing the apparatus described in the present invention on an foundation platform or other foundation 27 is illustrated.
The nacelle 28, tower sections and jacking crane are transported over an foundation platform or other foundation using a transport vehicle 29 as shown in Figure 47 and the nacelle is lifted onto the foundation platform or other foundation. The transport vehicle may then be removed. A crane 30 can then be assembled as shown in Figures 50 and 51 for use in winching the tower sections into position. The nacelle can the be temporarily supported whilst the jacking crane 31 is assembled and/or placed in position, as shown in Figure 52. The jacking crane is then extended. The tower sections can then be delivered to the foundation platform or foundation using a transport vehicle, as shown in Figure 53.

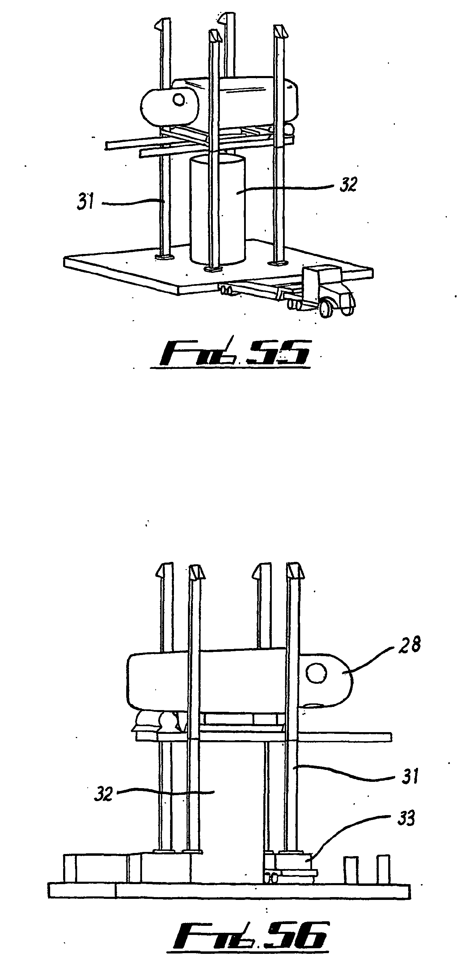

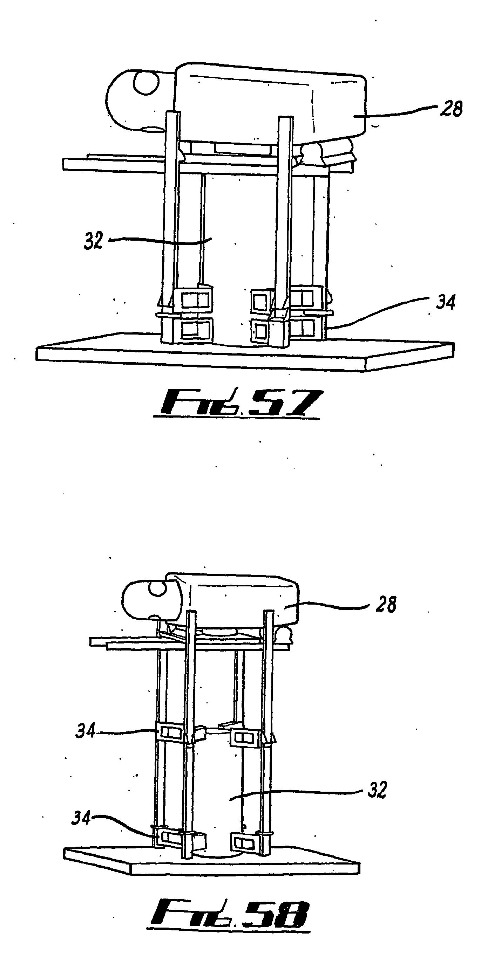

In order to erect the wind turbine tower a first tower section 32 is winched from the transport vehicle using the crane (Figure 54). This section is then slid into position within the jacking crane using the crane (Figure 55). The first tower section can thereafter be used to support the nacelle whilst the jacking crane is adjusted to provide clearance blocks at 33 for one or more clamps 34 which are used to safely and securely attach the jacking crane to the tower. This is shown in Figures 56 and 57. This process is then repeated with further tower sections to erect a tower having the nacelle located at the top, on which turbine blades can be mounted. In the example embodiment and outline procedure for erecting a wind turbine is as follows:
(a) The nacelle and hub is delivered over the foundation (or assembled there if it is very large) and the jacking crane is assembled around it using a small site crane.
(b) The jacks lift the nacelle off the transporter or support platform to a height sufficient for the onboard cranes to upend and insert a tower section directly beneath the nacelle.
(c) The jacks extend further to make space for a second tower section, and the upper grippers engage with the top of the first tower section.
(d) The second section is lifted, inserted, and bolted to the first.
(e) The upper grips now release and the jacks extend slightly so that the upper grippers now engage with the bottom of the newly installed upper tower section.
(f) With the upper set of grippers locked, the jacks contract to bring a bottom set of grippers to engage with the top of the lower section of tower.
(g) The top set of grippers can now release and the jacking crane extends to make space for the third tower section. The upper grips engage with the top of the tower before the next section is fitted.
(h) The process repeats from step (c) until the tower is complete.
(i) When the tower is complete, the jacks lower the nacelle onto the tower for bolting, and the onboard cranes lift the blades into the hub for bolting.

It will be appreciated that there are fundamental differences between the jacking crane and a conventional crane. A conventional crane is optimised for flexibility, whilst the jacking crane is designed for a specific task - to erect large wind turbines. In practice this means:
- there is no need for a road-going chassis - it only climbs towers.
- there is no need for a slew capability.
- the hook is replaced by a transfer carriage in the top-works of the jacking crane to provide precision handling and mechanical control at all times.

An advantage of the jacking system herein described lies in the fact that it can be used, not only to erect and disassemble towers, but can also be used to climb existing towers for maintenance. A particular advantage of the present invention lies in the fact that the wind turbine can be erected in its entirety (including the erection of the tower, nacelle and blades) in an offshore location, without the requirement for a specialist vessel is required to be in attendance. As a consequence lifetime costs are greatly reduced. In addition the process has desirable reversibility and thus the wind turbine can be removed, or the blades, nacelle or indeed tower can be replaced if required. This facilitates ongoing maintenance. The apparatus described herein and in the Applicant's co-pending UK Application No 0206569.6 and International Application No GB2003/001159 is also self sufficient, in other words all of the delicate lifting and handling operations are controlled from the already constructed structure. The vessel may therefore deliver the jacking mechanism and the tower sections and leave and does not need to remain in the area.

Components are landed onto the foundation platform in a conventional way, but from there they are handled by handling equipment that is supported by the already erected structure. This eliminates relative movement (e.g. between vessel hook and structure) which makes the operation safer and eliminates the requirement for massive offshore cranes.

A further advantage is that erection of the self installing turbine is inherently safer than convention methods because all of the lifts are controlled and do not require high unsupported loads. Thus the safety of the construction crew is ensured. The apparatus brings significant cost savings by eliminating the requirement for large cranes both on and offshore, and is less sensitive to weather and geotechnical conditions. This is of particular advantage as offshore work will not be disrupted by sea state (tide and waves or wide).

A yet further important advantage lies in the use of one or more clamps which ensure that the jacking crane is securely and safely attached to the tower or tower sections. Other advantages are inherent in the described apparatus as a low cost crane is used, the tower sections are easier to handle and transport, the cost and time of erection is minimised and the apparatus can also be used for the maintenance of existing turbines, as well as building new turbines.

## Claims

1. An arrangement for building or dismantling a tower structure, comprising a jacking crane (5) having a frame comprising:
- at least one upper grip assembly
- at least one lower grip assembly
- a plurality of variable legs, substantially vertically aligned, and adapted to extend or retract the frame and to vary the distance between the upper and lower grip assemblies,
wherein
- each grip assembly is adapted to independently engage or disengage with the tower structure and, during engagement, to support the crane on it.

2. An arrangement as in Claim 1 wherein the legs are operable to extend or retract in coordination with the actuation of the upper and lower grip assemblies and to advance the arrangement along the tower structure.

3. An arrangement as claimed in Claim 1 or Claim 2 comprising means adapted to be received by purpose built attachment points on the tower.

4. An arrangement as claimed in Claim 3 wherein the upper and lower grip assemblies are adapted to fit into pockets provided on the tower.

5. An arrangement as claimed in any previous claim wherein the upper and lower grip assemblies comprise clamps adapted to grip the tower by compression and friction alone.

6. An arrangement as claimed in any previous claim wherein the clamps comprise a flexible backing substrate that is tensioned at its ends to create a hoop tension in the flexible backing substrate.

7. An arrangement as claimed in Claim 5 or Claim 6 wherein the clamps comprise contact pads mounted on a flexible backing substrate that is tensioned at its ends, the contact pads being made from a compliant material.

8. An arrangement as claimed in any previous claim wherein the flexible backing substrate is adapted to contact the tower in a plurality of locations or sections to provide even distribution of load to the tower.

9. An arrangement as claimed in any of Claim 5 to 8 wherein the clamps are mounted on an arrangement of struts, ties and beams, said arrangement being adapted to accommodate variations in the cross section of the tower or tower sections.

10. An arrangement as claimed in of Claims 6 to 9, comprising means for altering the length of the flexible backing substrate to ensure the clamp maintains a secure fit to the tower.

11. An arrangement as claimed in any preceding claim, comprising means for locking the clamps to the tower.

12. An arrangement as claimed in any preceding claim, further adapted to carry a nacelle (6) positioned on top of the jacking crane.

13. An arrangement as claimed in any preceding claim, wherein the jacking crane comprises a winch adapted to lift tower sections into position, on top of a previous tower section.

14. An arrangement as claimed in any preceding claim, further comprising a working platform and facilities for construction or maintenance personnel.

15. An arrangement as claimed in Claim 14 wherein the facilities include testing, monitoring, or service facilities, or welfare facilities for personal use.

16. An arrangement as claimed in any previous claim further comprising:
- a pluratity of tower sections adapted to be combined to erect a tower;
- a nacelle and one or more blades;
wherein the jacking crane is further adapted to position each of the tower sections during erection and to carry the nacelle while climbing the tower.

17. An arrangement as claimed in Claim 16 wherein the tower sections have a high grip surface achieved by the use of anti-slip paint or glue-on grip strips.

18. An arrangement as claimed in any one of Claims 16 to 17, wherein the jacking crane comprises a boom, and the apparatus further comprises a seawater ballast to counterbalance the boom.

19. A method of moving a jacking crane upwards or downwards on a tower structure, the crane including upper and lower grip assemblies for gripping the structure and supporting the crane on it, and variable legs, the method comprising:
- engaging one of the upper or lower grip assemblies with the tower structure
- extending the legs to increase the distance between the upper and lower grip assemblies
- engaging the other of the upper or lower grip assemblies with the tower structure
- disengaging the first engaged of the upper or lower grip assemblies
- retracting the legs to decrease the distance between the upper and lower grip assemblies
- repeating the above steps, to advance the crane along the tower structure.

20. A method as claimed in Claim 19 further comprising steps for constructing a wind turbine tower from tower sections, wherein the jacking crane climbs the tower during construction.

21. A method as claimed in Claim 20 wherein the tower constructing steps comprises raising an additional tower section into place on top of the previously topmost tower section.

22. A method as claimed in Claim 21 further comprising raising an additional tower section into place on top of the previously topmost tower section, installing the additional section and advancing the crane onto the newly installed tower section.

23. A method as claimed in Claim 22 further comprising raising a nacelle onto the topmost tower section and installing it.

24. The method as claimed in any of Claims 19 to 23 comprising the further step of transporting the blades up the tower on the jacking crane for attachment to the nacelle.

25. A method as claimed in Claim 19 further comprising steps for decommissioning a wind turbine tower from tower sections, wherein the jacking crane descends a tower during decommissioning.

26. A method as claimed in Claim 24 wherein the tower decommissioning steps additional comprise descending the tower to the tower section below the topmost tower section and then removing the topmost section.

27. A method as claimed in Claim 19 further compmrising steps for maintaining a wind turbine tower.

28. The method as claimed in any of Claims 19 to 27 wherein the method is automated.

29. The method as claimed in any of Claims 17 to 28 wherein the method is controlled by remote control.

## Patentansprüche

1. Anordnung zum Aufbauen oder Abbauen einer Turmstruktur, umfassend einen Aufbockkran (5) mit einem Rahmen, umfassend:
- zumindest eine obere Griffanordnung
- zumindest eine untere Griffanordnung
- eine Mehrzahl von variablen Beinen, im Wesentlichen vertikal ausgerichtet, und angepasst, um den Rahmen auszufahren oder einzufahren und um die Distanz zwischen den oberen und unteren Griffanordnungen zu variieren,
wobei
- jede Griffanordnung angepasst ist, um unabhängig bezüglich der Turmstruktur einzugreifen oder auszukuppeln und während des Eingriffs den Kran darauf zu tragen.

2. Anordnung nach Anspruch 1, bei welcher die Beine betriebsfähig sind, um in Koordination mit der Betätigung der oberen und unteren Griffanordnungen auszufahren oder einzufahren und die Anordnung entlang der Tumstruktur vorwärts zu bewegen.

3. Anordnung nach Anspruch 1 oder 2, umfassend Mittel, die angepasst sind, um von speziell errichteten Befestigungspunkten auf dem Turm aufgenommen zu werden.

4. Anordnung nach Anspruch 3, bei welcher die oberen und unteren Griffanordnungen angepasst sind, um in Taschen zu passen, die auf dem Turm bereitgestellt sind.

5. Anordnung nach einem der vorherigen Ansprüche, bei welcher die oberen und unteren Griffanordnungen Klemmen umfassen, die angepasst sind, um den Turm allein mittels Kompression und Reibung zu greifen.

6. Anordnung nach einem der vorherigen Ansprüche, bei welcher die Klemmen ein flexibles Trägersubstrat umfassen, das an seinen Enden gespannt ist, um eine Ringzugspannung im flexiblen Trägersubstrat zu erzeugen.

7. Anordnung nach Anspruch 5 oder 6, bei welcher die Klemmen Kontaktunterlagen umfassen, die auf einem flexiblen Trägersubstrat montiert sind, das an seinen Enden gespannt ist, wobei die Kontaktunterlagen aus einem nachgiebigen Material hergestellt sind.

8. Anordnung nach einem der vorherigen Ansprüche, bei welcher das flexible Trägersubstrat angepasst ist, um den Turm in einer Mehrzahl von Orten oder Abschnitten zu kontaktieren, um eine gleichmäßige Lastverteilung an den Turm bereitzustellen.

9. Anordnung nach einem der Ansprüche 5 bis 8, bei welcher die Klemmen auf einer Anordnung von Streben, Verbindungen und Trägern montiert sind, wobei die Anordnung angepasst ist, um Variationen im Querschnitt des Turms oder der Turmabschnitte Rechnung zu tragen.

10. Anordnung nach einem der Ansprüche 6 bis 9, umfassend Mittel zum Verändern der Länge des flexiblen Trägersubstrats, um sicherzustellen, dass die Klemme eine sichere Passung am Turm aufrechterhält.

11. Anordnung nach einem der vorherigen Ansprüche, umfassend Mittel zum Verriegeln der Klemmen bezüglich des Turms.

12. Anordnung nach einem der vorherigen Ansprüche, ferner angepasst zum Tragen einer Zelle (6), positioniert oben auf dem Aufbockkran.

13. Anordnung nach einem der vorherigen Anspruche, bei welcher der Aufbockkran eine Winde umfasst, die angepasst ist, um Turmabschnitte in Position oben auf einen vorherigen Turmabschnitt zu heben.

14. Anordnung nach einem der vorherigen Ansprüche, ferner umfassend eine Arbeitsplattform und Einrichtungen für Konstruktions- oder Wartungspersonal.

15. Anordnung nach Anspruch 14, bei welcher die Einrichtungen Test-, Überwachungs- oder Serviceeinrichtungen, oder Sozialeinrichtungen für die persönliche Verwendung umfassen.

16. Anordnung nach einem der vorherigen Ansprüche, ferner umfassend:
- eine Mehrzahl von Turmabschnitten, die angepasst sind, um kombiniert zu werden, um einen Turm zu errichten;
- eine Zelle und ein oder mehrere Rotorblätter;
wobei der Aufbockkran ferner angepasst ist, um jeden der Turmabschnitte während des Aufrichtens zu positionieren und um die Zelle während des Hochkletterns des Turms zu tragen.

17. Anordnung nach Anspruch 16, bei welcher die Turmabschnitte eine hochgradig griffige Oberfläche aufweisen, erzielt durch die Verwendung von rutschfester Farbe oder aufklebbaren Griffstreifen.

18. Anordnung nach einem der Ansprüche 16 bis 17, bei welcher der Aufbockkran einen Ausleger umfasst, und die Anordnung ferner einen Seewasserballast umfasst, um den Ausleger auszubalancieren.

19. Verfahren zum Bewegen eines Aufbockkrans nach oben oder nach unten auf einer Turmstruktur, wobei der Kran obere und untere Griffanordnungen zum Greifen der Struktur und Tragen des Krans darauf, sowie variable Beine umfasst, wobei das Verfahren umfasst:
- Eingreifen einer der oberen oder unteren Griffanordnungen mit der Turmstruktur
- Ausfahren der Beine, um die Distanz zwischen den oberen und unteren Griffanordnungen zu vergrößern
- Eingreifen der anderen der oberen oder unteren Griffanordnungen mit der Turmstruktur
- Auskoppeln der ersten eingegriffenen der oberen oder unteren Griffanordnungen
- Zurückziehen der Beine, um den Abstand zwischen den oberen und unteren Griffanordnungen zu verringern
- Wiederholen der obigen Schritte, um den Kran entlang der Turmstruktur vorwärts zu bewegen.

20. Verfahren nach Anspruch 19, ferner umfassend Schritte zum Konstruieren eines Windturbinenturms aus Turmabschnitten, wobei der Aufbockkran den Turm während der Konstruktion hochklettert.

21. Verfahren nach Anspruch 20, bei welchem die Turmkonstruktionsschritte das Aufrichten eines zusätzlichen Turmabschnitts in Position oben auf dem zuvor obersten Turmabschnitt umfassen.

22. Verfahren nach Anspruch 21, ferner umfassend das Errichten eines zusätzlichen Turmabschnitts in Position oben auf dem zuvor obersten Turmabschnitt, Installieren des zusätzlichen Abschnitts und Vorwärtsbewegen des Krans auf den neu installierten Turmabschnitt.

23. Verfahren nach Anspruch 22, ferner umfassend das Errichten einer Zelle auf dem obersten Turmabschnitt und Installieren dieser.

24. Verfahren nach einem der Ansprüche 19 bis 23, umfassend den weiteren Schritt des Transportierens der Rotorblätter den Turm hinauf auf dem Aufbockkran zur Befestigung an die Zelle.

25. Verfahren nach Anspruch 19, ferner umfassend Schritte zum Stilllegen eines Windturbinenturms aus Turmabschnitten, wobei der Aufbockkran einen Turm während des Stilliegens herabsteigt.

26. Verfahren nach Anspruch 24, bei welchem die Turm-Stilllegungsschritte zusätzlich das Herabsteigen des Turms zum Turmabschnitt unterhalb des obersten Turmabschnitts und dann das Entfernen des obersten Abschnitts umfassen.

27. Verfahren nach Anspruch 19, ferner umfassend Schritte zum Warten eines Windturbinenturms.

28. Verfahren nach einem der Ansprüche 19 bis 27, bei welchem das Verfahren automatisiert ist.

29. Verfahren nach einem der Ansprüche 17 bis 28, bei welchem das Verfahren mittels Fernsteuerung gesteuert wird.

## Revendications

1. Agencement pour la construction ou le démantèlement d'une structure de tour, comportant une grue de levage (5) ayant un châssis comportant :
- au moins un ensemble supérieur de préhension,
- au moins un ensemble inférieur de préhension,
- de multiples jambes variables, alignées sensiblement verticalement et conçues pour une extension ou un retrait du châssis et pour une variation de la distance entre les ensembles supérieur et inférieur de préhension,
dans lequel
- chaque ensemble de préhension est conçu pour, indépendamment, engager la structure de la tour ou s'en dégager et, pendant l'engagement, pour supporter la grue sur elle.

2. Agencement selon la revendication 1, dans lequel les jambes peuvent être actionnées pour une expansion ou un retrait en coordination avec l'actionnement des ensembles supérieur et inférieur de préhension et pour l'avance de l'agencement le long de la structure de la tour.

3. Agencement selon la revendication 1 ou la revendication 2, comportant des moyens conçus pour être reçus par des points d'attache construits à dessein sur la tour.

4. Agencement selon la revendication 3, dans lequel les ensembles supérieur et inférieur de préhension sont conçus pour se loger dans des alvéoles prévues sur la tour.

5. Agencement selon l'une quelconque des revendications précédentes, dans lequel les ensembles supérieur et inférieur de préhension comprennent des brides conçues pour réaliser une prise sur la tour uniquement par compression et frottement.

6. Agencement selon l'une quelconque des revendications précédentes, dans lequel les brides comprennent un substrat de support flexible qui est tendu à ses extrémités pour engendrer une tension circonférentielle dans le substrat de support flexible.

7. Agencement selon la revendication 5 ou la revendication 6, dans lequel les brides comprennent des plots de contact montés sur un substrat de support flexible qui est tendu à ses extrémités, les plots de contact étant réalisés en une matière souple.

8. Agencement selon l'une quelconque des revendications précédentes, dans lequel le substrat de support flexible est conçu pour entrer en contact avec la tour en plusieurs emplacements ou sections afin d'établir une répartition égale de la charge sur la tour.

9. Agencement selon l'une quelconque des revendications 5 à 8, dans lequel les brides sont montées sur un agencement d'entretoises, de tirants et de poutres, ledit agencement étant conçu pour s'adapter à des variations de la section transversale de la tour ou de sections de la tour.

10. Agencement selon les revendications 6 à 9, comportant des moyens destinés à modifier la longueur du substrat de support flexible pour assurer que la bride maintient un ajustement solide sur la tour.

11. Agencement selon l'une quelconque des revendications précédentes, comportant des moyens destinés à bloquer les brides sur la tour.

12. Agencement selon l'une quelconque des revendications précédentes, conçu en outre pour porter une nacelle (6) positionnée sur le sommet de la grue élévatrice.

13. Agencement selon l'une quelconque des revendications précédentes, dans lequel la grue élévatrice comporte un treuil conçu pour lever des sections de la tour jusqu'en position, sur le sommet d'une section de tour précédente.

14. Agencement selon l'une quelconque des revendications précédentes, comportant en outre une plate-forme de travail et des installations pour le personnel de construction ou de maintenance.

15. Agencement selon la revendication 14, dans lequel les installations comprennent des installations d'essai, de contrôle ou de service, ou des installations de santé à l'usage du personnel.

16. Agencement selon l'une quelconque des revendications précédentes, comportant en outre :
- de multiples sections de tour conçues pour être combinées pour ériger une tour ;
- une nacelle et une ou plusieurs pales ;
dans lequel la grue élévatrice est en outre conçue pour positionner chacune des sections de tour pendant l'érection et pour porter la nacelle tout en escaladant la tour.

17. Agencement selon la revendication 16, dans lequel les sections de tour ont une surface de prise élevée obtenue par l'utilisation d'une peinture antidérapante ou de bandes de prise collées.

18. Agencement selon l'une des revendications 16 et 17, dans lequel la grue élévatrice comporte une flèche, et l'appareil comporte en outre un ballast d'eau de mer pour équilibrer la flèche.

19. Procédé pour faire monter ou descendre une grue élévatrice sur une structure de tour, la grue comprenant des ensembles supérieur et inférieur de préhension destinés à réaliser une prise sur la structure et à supporter la grue sur celle-ci, et des jambes variables, le procédé comprenant :
- l'engagement de l'un des ensembles supérieur ou inférieur de préhension avec la structure de la tour,
- l'extension des jambes pour augmenter la distance entre les ensembles supérieur et inférieur de préhension,
- l'engagement de l'autre des ensembles supérieur ou inférieur de préhension avec la structure de la tour,
- le dégagement du premier, engagé, des ensembles supérieur ou inférieur de préhension,
- le retrait des jambes pour diminuer la distance entre les ensembles supérieur et inférieur de préhension,
- la répétition des étapes ci-dessus, pour faire avancer la grue le long de la structure de la tour.

20. Procédé selon la revendication 19, comprenant en outre les étapes pour la construction d'une tour pour turbine éolienne à partir de sections de tour, dans lequel la grue élévatrice escalade la tour pendant la construction.

21. Procédé selon la revendication 20, dans lequel les étapes de construction de la tour comprennent l'élévation d'une section additionnelle de tour jusqu'en place sur le sommet de la section de tour précédemment la plus haute.

22. Procédé selon la revendication 21, comprenant en outre l'élévation d'une section de tour additionnelle jusqu'en place sur le sommet de la section de tour précédemment la plus haute, l'installation de la section additionnelle et l'avance de la grue jusque sur la section de tour nouvellement installée.

23. Procédé selon la revendication 22, comprenant en outre l'élévation d'une nacelle jusque sur la section de tour la plus haute et son installation.

24. Procédé selon l'une quelconque des revendications 19 à 23, comprenant l'étape supplémentaire de transport des pales en s'élevant le long de la tour sur la grue élévatrice pour leur montage sur la nacelle.

25. Procédé selon la revendication 19, comprenant en outre des étapes pour le désarmement d'une tour pour turbine éolienne à partir de sections de tour, dans lequel la grue élévatrice descend le long d'une tour pendant le désarmement.

26. Procédé selon la revendication 24, dans lequel les étapes de désarmement de tour comprennent en outre la descente de la tour jusqu'à la section de tour située en dessous de la section de tour la plus haute, puis l'enlèvement de la section la plus haute.

27. Procédé selon la revendication 19, comprenant en outre les étapes pour la maintenance d'une tour pour turbine éolienne.

28. Procédé selon l'une quelconque des revendications 19 à 27, lequel procédé est automatisé.

29. Procédé selon l'une quelconque des revendications 17 à 28, lequel procédé est commandé par une commande à distance.
